# EUROPEAN PATENT APPLICATION

(11) **EP 0 967 566 A2**
(43) Date of publication of application: **29.12.1999**
(21) Application number: 99108677.8
(22) Date of filing: 17.05.1999
(51) Int. Cl.: G06K 11/10

(54) **Coordinate input system**

(30) Priority: 22.06.1998 US 102382
(71) Applicant: Wacom Co., Ltd., Saitama-ken 349-1148 (JP)
(72) Inventor: Katsurahira, Yuji, Kazo-shi, Saitama 347-0016 (JP)
(74) Representative: Paul, Dieter-Alfred, Dipl.-Ing.

(57) **Abstract**

A digitizer tablet transmits electromagnetic waves, including digital signals therein, to a corresponding pointer (e.g. stylus, mouse, or the like). A tuning circuit in the pointer receives the waves from the tablet. The pointer then transmits back to the tablet electromagnetic waves which include digital signals indicative of pressure being applied by the pointer on the tablet. An efficient system is also provided which enables the pointer to transmit its unique ID to the tablet in digital form without sacrificing performance of the overall system.

## Description

This application relates to a digitizer coordinate input system including a tablet and pointing member (e.g. stylus, puck, or mouse). More particularly, this application relates to a coordinate input system wherein digital signals are sent back and forth between the tablet and the pointer.

### RELATED APPLICATIONS/PATENTS

This application relates to commonly owned U.S. Patent Nos. 4,878,553, 5,028,745, 5,600,105, 5,679,930, 5,661,269, 5,629,500, 5,672,852, 5,644,108, and U.S. Application Serial Nos. 08/870,712, 08/917,891, 08/806,160, and 08/840,617, the entire disclosures of which are hereby incorporated herein by reference,

### BACKGROUND OF THE INVENTION

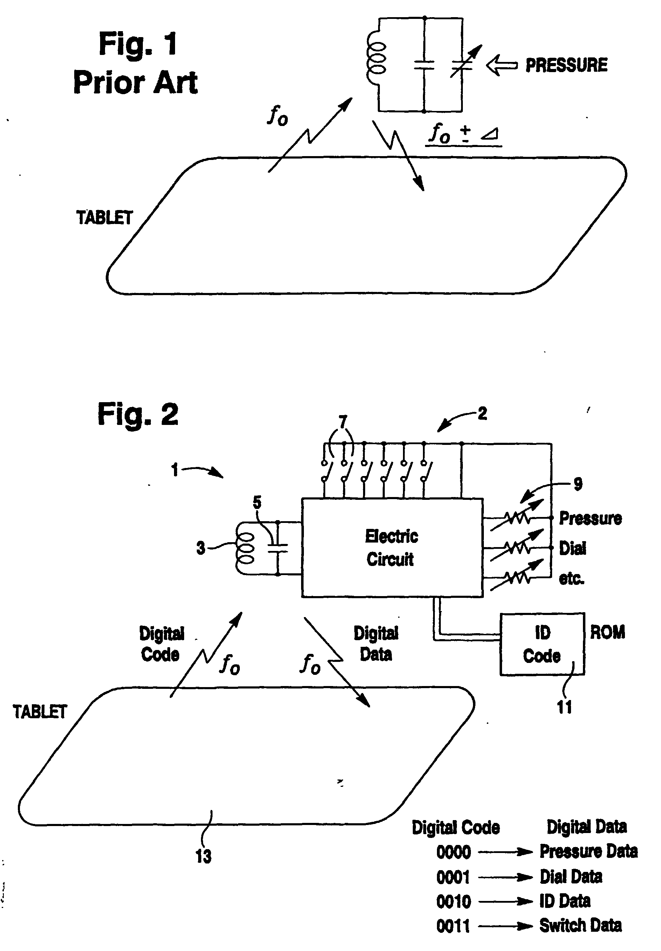

Digitizer systems are known in the art. For example, see U.S. Patent Nos. 4,878,553 and 5,028,745. Figures 1, 3, and 5 herein illustrate prior art digitizer systems which relate to the '553 and '745 patents.

In prior art Fig. 1 for example, the pointer is provided with a resonance circuit resonating at frequency f0, and this portion reacts to waves generated by loop coils of the tablet so as to obtain the position of pointing. The pointer receives waves from the tablet and generated waves which are sent back to the tablet so that the tablet can detect the position of the pointer relative thereto. This pointer resonance circuit is connected to a condenser (C switch unit) which changes in capacity in accordance with pen pressure, and the resonance frequency changes within the range of f0 ±Æ as the pen pressure changes. The pen pressure has been detected by tablet detecting this change in frequency as a change in phase. While this method of transmitting pointer (e.g. stylus) pressure information to the tablet is satisfactory, it can be improved upon in certain respects.

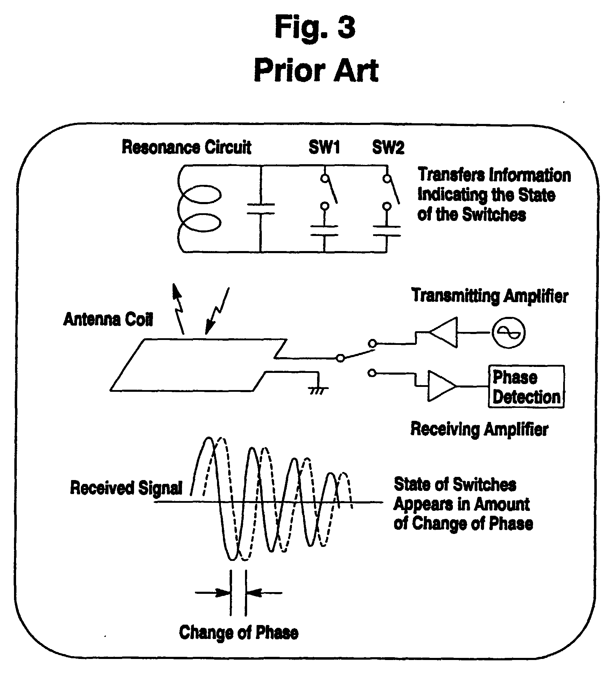

Prior art Figure 3 illustrates a conventional digitizer communication method. A small-capacity condenser is connected to the resonance circuit within the pointer via a switch, so that the resonance frequency changes slightly by operating the switch. Operation of this switch is detected by the tablet side detecting phase offset of the signal. Thus, this conventional communication system uses the phase of signals from the pointer.

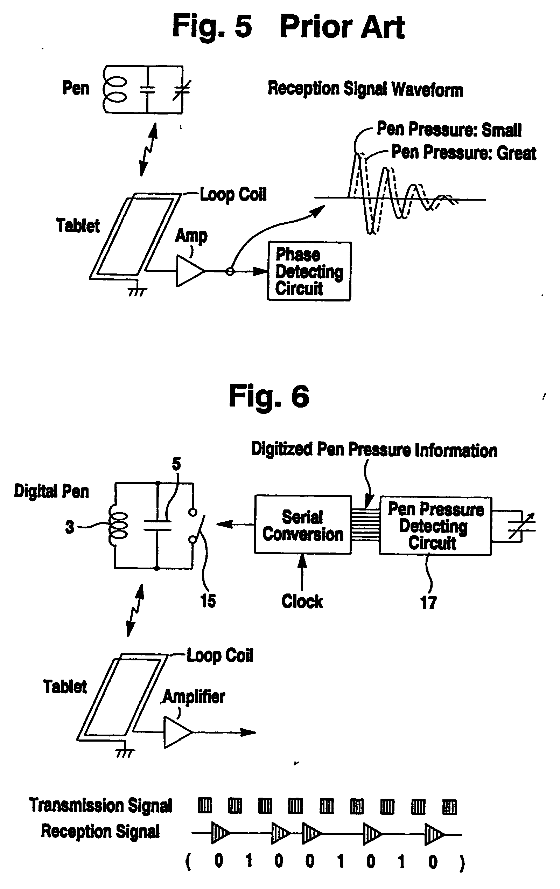

With regard to detecting stylus pressure on the tablet, prior art Figure 5 shows a conventional pen pressure detecting method. A small-capacity variable condenser called a C-switch unit is connected to the resonance circuit of the pointer. This C-switch unit is used as the pen pressure sensor, the capacity thereof changing according to the pen pressure. The capacity accurately changes over a range of several F to 100 pF according to a range of 0 to 500 g, thereby detecting the pen pressure applied on the tip of the pen as the phase value.

It is apparent from the above that there exists a need in the art for an improved method and system to accurately detect the pen pressure. There also exists a need in the art for a system/method of enabling the tablet to identify the pointer which is being used in conjunction therewith in an efficient manner without sacrificing performance of the system.

It is a purpose of this invention to fulfull the above describes needs in the art as well as other needs.

### SUMMARY OF THE INVENTION

It is an object of this invention to provide a system wherein digital signals are sent back and forth between the pointer and tablet in a digitizer system.

It is an object of this invention to provide a system wherein the tablet identification signals identifying the pointer are sent to the tablet in an efficient manner without sacrificing performance to any significant degree.

It is an object of this invention to provide pressure detection via digital signals sent from the pointer to the tablet.

It is an object of this invention to provide a resonance circuit in the pointer.

It is an object of this invention to perform transmission and reception from and to the tablet.

It is an object of this invention to provide loop coils arrayed at the tablet so as to overlap in the X-axial direction and Y-axial direction.

It is an object of this invention to calculate coordinate values by scanning at least some, and potentially all, ofthe coils and interpolating the reception level.

It is an object of this invention to first scan all coils in one or two axial directions, and then perform a partial scan once the pointer is found (i.e. sector scanning).

It is an object of this invention to detect the inclination of the pen from side lobes.

### IN THE DRAWINGS

Figure 1 is a schematic diagram illustrating a conventional digitizer system including a pointer (including a tuning circuit) and a corresponding tablet over which the pointer moves.
Figure 2 is a schematic/block diagram illustrating a digitizer tablet and corresponding pointer circuitry according to an embodiment of this invention.
Figure 3 is a schematic illustrating different features of the conventional Figure 1 digitizer system.
Figure 4 is a schematic illustrating different features of a digital digitizer system in accordance with an embodiment of this invention.
Figure 5 is a schematic illustrating different features of the conventional Figure 1 digitizer system.
Figure 6 is a schematic illustrating different features of a digital digitizer system in accordance with an embodiment of this invention.
Figure 7 is a schematic illustrating circuitry and a technique for extracting clock signals in accordance with an embodiment of this invention.
Figure 8 is a schematic illustrating circuitry and techniques for use in conjunction with digitizing pen pressure according to an embodiment of this invention.
Figure 9 is a power source extracting circuit according to an embodiment of this invention.
Figure 10 is a block diagram of a digital pointer (e.g. stylus or pen) in accordance with an embodiment of this invention.
Figure 11 illustrates various waveforms applicable to the Figure 10 pointer circuitry.
Figure 12 illustrates various waveforms of digital communication from a tablet to a pointer in accordance with an embodiment of this invention.
Figure 13 illustrates circuitry and corresponding waveforms regarding transmission duration detecting techniques used in certain embodiments of this invention.
Figure 14 is a block diagram of a pointer with ID functionality according to an embodiment of this invention.
Figure 15 illustrates various waveforms when a particular command is sent.
Figure 16 illustrates various waveforms when another command is sent.
Figure 17 illustrates yet further waveforms when yet another command is sent.
Figure 18 is a block diagram illustrating pointer circuitry for frequency shift in accordance with an embodiment of this invention.
Figure 19 illustrates circuitry and corresponding waveforms for a frequency shifting circuit according to certain embodiments of this invention.
Figure 20 illustrates a MOSFET for use in certain embodiments of this invention.
Figure 21 is a flowchart illustrating steps taken in multi-mode embodiments of this invention.
Figures 22(a) and 22(b) illustrate adjacent pointer coils for use in detecting pointer rotation in accordance with certain embodiments of this invention.
Figure 23 is a schematic block diagram illustrating circuitry for detecting rotation of a pointer in accordance with certain embodiments of this invention.
Figure 24 illustrates circuitry and corresponding waveforms for detecting rotational angle in accordance with the Figure 22 and 23 embodiments of this invention.
Figure 25 illustrates both conventional send/receive methodology as well as send/receive methodology in accordance with certain embodiments of this invention.
Figure 26 illustrates waveforms sent during transmitting coil scanning.
Figure 27 is a circuit diagram of a tablet in accordance with certain embodiments of this invention.
Figure 28 illustrates waveforms of the Figure 27 circuitry.
Figure 29 is a circuit diagram of a clock signal extracting circuit in accordance with certain embodiments of this invention.
Figure 30 illustrates extracting clock signals via the Figure 29 circuitry.
Figure 31 illustrates a pen pressure zero adjustment circuit in accordance with certain embodiments of this invention.
Figure 32 illustrates a data returning circuit in accordance with certain embodiments of this invention.
Figure 33 illustrates waveforms used in the data returning circuit of Figure 32.
Figure 34 illustrates switching of a resonance circuit in a pointer according to an embodiment of this invention by diode.
Figure 35 illustrates a side switched detecting circuit in accordance with an embodiment of this invention.
Figure 36 illustrates operational waveforms of the Figure 35 circuit.
Figure 37 illustrates a switching circuit with little electric current consumption for use in certain embodiments of this invention.
Figure 38 illustrates circuitry in a pointer with eraser according to an embodiment of this invention.
Figure 39 illustrates a command reception circuit in accordance with an embodiment of this invention.
Figure 40 illustrates waveforms of the Figure 39 circuit.
Figure 41 illustrates wiring to a 64-bit fuse ROM according to an embodiment of this invention.
Figure 42 illustrates waveform operations in the event of a given receiving command in accordance with certain embodiments of this invention.
Figure 43 illustrates waveforms given the operation of another receiving command.
Figure 44 is a circuit diagram illustrating boosting frequency shift signals in accordance with certain embodiments of this invention.

### DETAILED DESCRIPTION OF CERTAIN EMBODIMENTS OF THIS INVENTION

Referring now more particularly to the accompanying drawings in which like reference numerals indicate like parts throughout the several views.

Figure 2 illustrates a schematic confirmation of a digital digitizer system according to an embodiment of this invention. The pointer 1 is provided with an IC in addition to the resonance circuit (coil 3 and capacitor 5), and the IC 2 is provided with a plurality of switches 7 and analog sensors 9, as necessary. Also built in is ROM 11, in which is stored written a unique ID code(s) of the pointer(s). All of this information indicative of the state of switches 7 and sensors 9 is detected at the tablet. Also, two-way digital communication is carried out between the tablet and the pointer. The tablet 13 transmits 4 or 5 bits of digital code, the pointer 1 receives the digital code, and returns to the tablet 13 information corresponding to that code as digital data. The relation shown in Figure 2 is only to facilitate ease of description of the overview of certain embodiments of the invention, and does not represent the actual arrangement in detail.

Basic digital pen technology was developed in 1993, but originally was developed in order to do away with the need for phase information detection on the tablet and lower costs. However, this technology has shown to be more promising in the area of functionality rather than lowering costs, and thereafter, development has proceeded in the direction of realizing additional functions.

A pen which is used with a digital communication type tablet is called a digital pen. The digital pen differs from conventional pen pressure pens in the method by which pen pressure and switching information is communicated to the tablet.

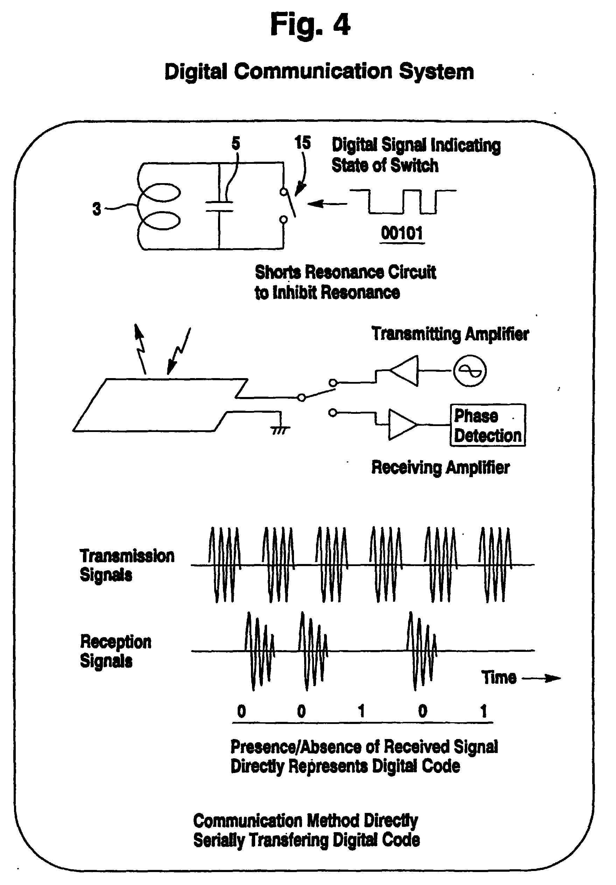

Figure 4 illustrates a communication method using a digital communication system according to an embodiment of this invention. The pointer has a resonance circuit as with the conventional arrangement including inductive coil 3 and at least one capacitor 5, and alternately performs transmission and reception of waves of a constant frequency from and to the tablet. In certain embodiments, the transmission and reception of waves from the tablet may each be continuous as one set of coils in the tablet may be transmitting waves to the pen and the other set of tablet coils receiving waves from the pen. An electronic switch 15 is connected to the resonance circuit of the pointer, as shown in the figure. When this switch is off, the resonance circuit is operable and thus the signals from the pointer (e.g. pen, puck, mouse, etc.) can be detected at the tablet. However, the resonance circuit does not resonate once the switch is turned on, and thus the signals cannot be detected at the tablet. Now, control is performed with digital signals serial on a time basis as shown in the figure, as the control signals of this switch 15. In the event that the timing of the change of the digital signals is made to match the timing of sending and receiving at the tablet, the received signals follow the control signals of the pointer and appear or do not appear on the tablet, as shown in the figure. In the figure, "00101" is added as a resonance circuit control signal, so the tablet detects digital information pertaining to "00101" by detecting this as presence/absence of signals. Here, in the event that the control signal of the pointer is "1" the signal is not detected at the tablet, so this is judged to be "0" in the event that a received signal appears, and is judged to be "1" in the event that a received signal does not appear. This is the digital communication system, in which digital code is directly serially transferred. The tablet in the digital communication system only needs to detect the presence/absence of signals, hence, there is no need to have a confirmation for detecting phase, as with conventional arrangements.

Figure 6 illustrates the pen pressure detecting principle using a digital pen in accordance with an embodiment of this invention. Electronic switch 15 is connected to the resonance circuit of the digital pen, as shown in the figure, this switch being the same as that in Figure 4 in that the switch is controlled by serial digital signals. As shown in Figure 6, the digital pen is provided internally with a pen pressure detecting circuit 17 which outputs the pen pressure as a digital value. The actual number of bits for digitizing the pen pressure is set according to the required pen pressure resolution. For example, 8 bits can deal with 256-step pen pressure detecting, and 10 bits can deal with 1024-step pen pressure detecting. Figure 6 shows a case where pen pressure is being represented by an 8 bit digital value. The obtained 8-bit digital signal is subjected to serial conversion 19 and thus controls the resonance circuit. In Figure 6, the pen pressure is "01001010," this code being detected according to the presence/absence of received signals at the tablet. Also, though not shown in the figure, a separate circuit is provided for shaping signals generated at the resonance circuit to obtain a power source.

There are several problems involved in attempting to realize a pen pressure pen with a battery-less and cordless arrangement. First, there is the problem of how to convert an analog quantity such as pen pressure into digital. A conventional A/D converter consumes a great deal of electric power, and it is difficult to supply the electric power with the minute electricity obtained from the resonance circuit. Second, there is the problem or how to obtain the clock for serial conversion of the digitized pen pressure information.

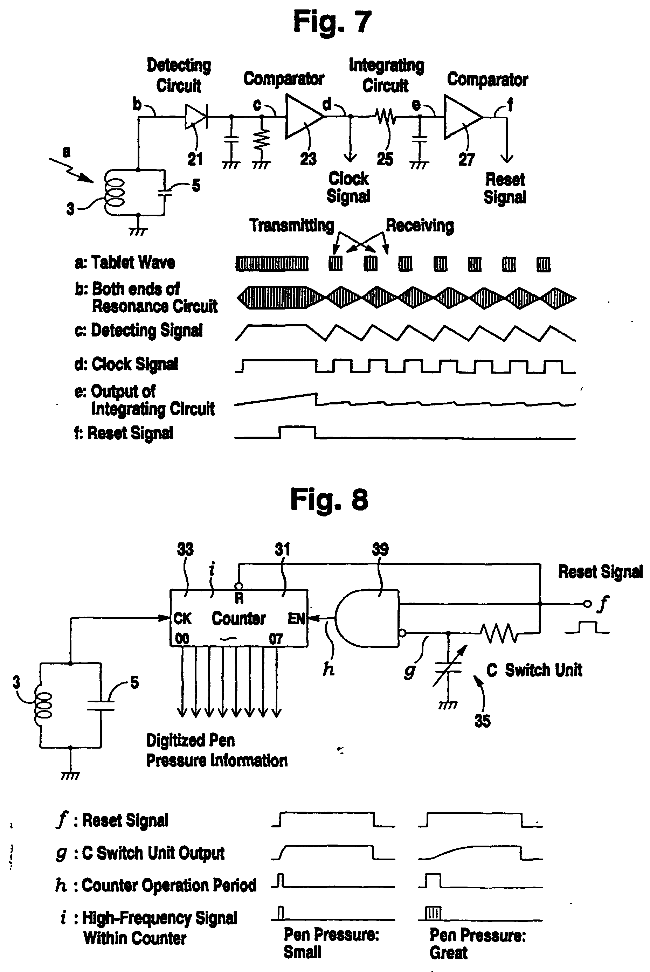

With regard to clock extraction, a description will be made from the point of how to obtain the clock signal in accordance with an embodiment of this invention. Referring to Figure 7, sequentially connected to the resonance circuit are a detecting circuit 21, comparator 23, integrating circuit 25, and comparator 27. "a" through "f" indicate the waveform at each portion in the figure, with the horizontal axis representing the time axis. A wave is transmitted from the tablet at a timing shown by "a" in the figure. The blank portion is a receiving period, and is a period in which the wave is stopped from the perspective of the pen. That is to say, there is a receiving period following a relatively long transmission, after which there is a relatively short transmission period, a reception period, and so forth, alternately.

Still referring to Fig. 7, "b" represents high-frequency signals generated on either side of the resonance circuit (including coil 3 and capacitor 5), and signals are generated which undulate in both the positive and negative sides, with the ground potential as a reference. Voltage is not immediately generated after wave transmission from the tablet begins; rather, signals of which the voltage gradually rises with passage of time are generated, as shown in the figure. After a certain amount of time passes during transmission from the tablet, the resonance circuit voltage becomes saturated, and there is no more increase. When wave transmission stops, the signal "b" gradually dies away. Signal "c" is an output waveform for the detecting circuit, and detects the positive envelope of the signal "b". The signal "d" is a comparator output signal which compares this at a constant level and converts into digital signals. This signal "d" is a digital signal which rises somewhat delayed as compared to starting of wave transmission at the tablet, and fails somewhat delayed as compared to the end of wave transmission thereof, this being almost synchronous with the transmitting/receiving timing at the tablet. This signal "d" is the clock signal in Figure 6.

Regarding the digital pen circuit in Figure 6, upon performing serial conversion 19 on digital information to be returned, not only does synchronizing have to be made with the transmitting/receiving timing at the tablet, but when the first bit is to be returned it must agree with the tablet. Accordingly, in Figure 7, a further integrating circuit and comparator are connected to the output of the signal "d". The output signal "e" of the integrating circuit gradually increases in voltage, so it does not reach the threshold level of the comparator connected behind it in the event that the wave transmitting time is short, but in the event that the transmitting time is sufficiently long, it reaches the threshold level within the transmitting period, thus obtaining a reset signal "f" such as shown in the figure. Although this is not shown in Figure 6, in the event that this reset signal "f" is used for resetting the serial converting circuit, and transmitting is performed at the timing shown by "a" in Figure 7, an operation can be arranged wherein the first bit of data is returned in the transmitting/receiving following the sufficiently long transmission, and the subsequent bits are returned sequentially. The tablet knows these timings beforehand, so as it can detect the digital information of the certain amount of bits being returned from the pointer without error.

With regard to pen pressure on the tablet, Figure 8 illustrates a method for converting pen pressure which is an analog quantity into digital with little electric consumption. As shown in Figure 7a, electric or electromagnetic waves are emitted from the table at a timing in which there is sufficiently long transmission period followed by a reception period in certain embodiments, and the relatively short transmitting periods and receiving periods are alternated. The "sufficiently long transmission period" here will hereafter be referred to as "burst period." Pen pressure detection is performed within this burst period. Also, pen pressure information detected as digital signals is sequentially returned one bit at a time in the transmitting/receiving following the burst period.

Now, description will be made regarding how pen pressure detection is made during the burst period. As shown in Figure 8, a counter circuit 31 is built into the pointer, and this clock terminal 33 is connected to the resonance circuit. That is, the arrangement is such to count the number of high-frequency waves generated in the resonance circuit. Also, a variable capacitor C switch unit 35 may be used as the pen pressure sensor. The reset signal "f" used in the figure is the signal "f" obtained in Figure 7 with no change. This reset signal is supplied to an integrating circuit comprised of a C switch unit and resistor. The signal "g" is an output signal from the integrating circuit, and has a waveform such as shown in the figure. In the event that the pen pressure applied to the C switch unit is small, the time constant of the integrating circuit is small, and in the event that the pen pressure applied thereto is great, the time constant is great, accordingly. Accordingly, the greater the pen pressure is, the more the signal "g" has a waveform which gradually rises, as shown in the figure. This signal "g" is input into an AND gate circuit 39 which has inverse input on one side, thus obtaining a signal "h" which has a pulse width defined by the period from the rising time of the reset signal "f" till the time at which the input threshold of the AND gate circuit is attained. This signal "h" has a waveform in which the greater the pen pressure, the longer the pulse width is. This pulse signal "h" is input to a terminal of the counter circuit, and the counter circuit operates only during this pulse period. That is, in the event that the pen pressure is small, the count value of the counter circuit is small, and in the event that the pen pressure is great, the count value is great, accordingly. In other words, the pen pressure is digitized.

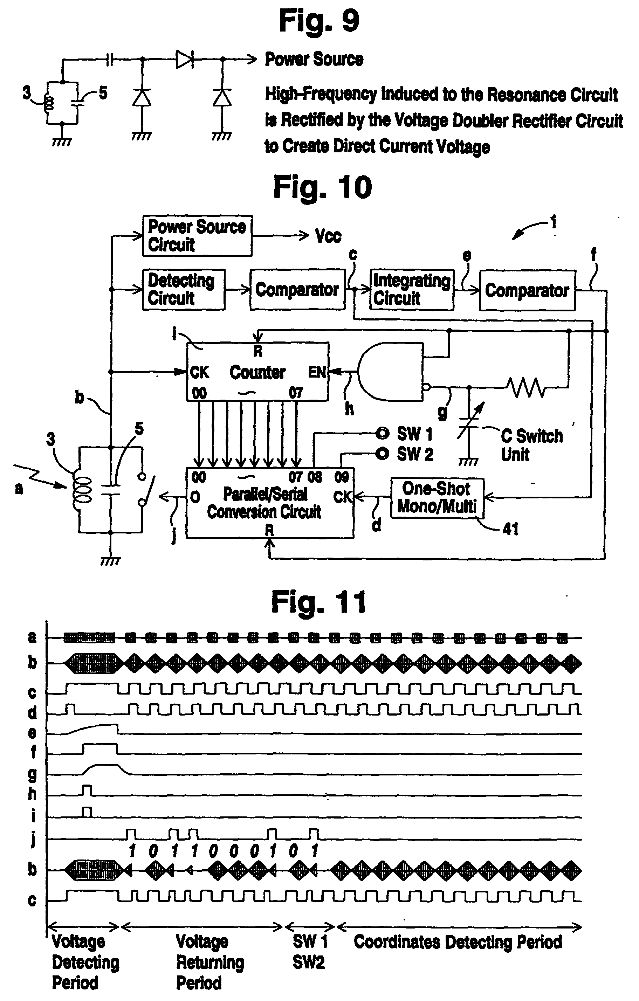

Figure 9 illustrates a circuit for extracting electric power source, in accordance with an embodiment of this invention. A condenser around 0.1 to 0.47 µF is appropriate. The obtained power source voltage depends on the transmission power from the tablet and the size of the pointer circuit, but voltage around 1.5 to 1.8 V can be obtained.

Consolidating the above-described Figures 6 through 9 yields the digital pointer 1 of Figure 10. Figure 11 shows the waveforms of each portion represented by "a" through "j" in Figure 10.

In the event that there is wave transmission from the tablet at a timing such as shown in Figure 10a, a waveform such as represented by "b'" is obtained in the resonance circuit. Detecting this waveform and shaping it in the comparator extracts clock signals such as represented by "c'". Also, the tablet transmits the waves continuously for a period longer than normal (burst), in order to notify the timing for returning the first bit. Thus, the signal "c'" maintains high level for a long period corresponding with the burst period. Such a signal "c'" passing through the integrating circuit results in a waveform which gradually rises during the burst period, such as the signal "e". This is shaped in the comparator, consequently yielding the signal "f" which generates pulses only during the burst period.

This signal "f" is the aforementioned reset signal. A pulse signal "h" which changes in width according to pen pressure is obtained by this signal "f" further passing through the integrating circuit comprised of the C switch unit and resistor. This pulse signal "h" is input to the enable terminal of the counter, and hence the number of waves input during this pulse period is counted whereby the pen pressure is converted into a digital value. Signal "i" shown in Figure 11 represents the high-frequency signals counted within the counter.

A total of 10 bits, comprised of the 8-bit output subjected to digital conversion in the counter, and the SW1 and SW2, are input into a parallel/serial converting circuit so s to obtain signal "j" as the serial output thereof. The clock signal used at this time is signal "d" which has been created based on signal "c'". Also, the reset signal "f" is added to the reset input of the parallel/serial converting circuit, so each time a burst is sent, the data of the buffer within the parallel/serial converting circuit is updated. That is to say, the operation is such that each time a burst is sent, 10-bit data is set, which is sequentially output beginning with the first bit for each leading edge of the subsequently input clock signal "d". The SW1 and SW2 correspond to side switches in conventional digitizer pens marketed by Wacom Tech. Corp., Vancouver, Washington.

The output signal "j" of the parallel/serial converting circuit is connected to control terminal of the switch connected to the resonance circuit, turning the resonance circuit on or off according to data to be returned. that is, the switch is turned on or off synchronously with the timing of wave transmission/reception, so waves are detected from the pen by loop coils of the tablet when the switch is off, and waves are not detected when the switch is on. Accordingly, information from the pen can be detected as 1 or 0, based on whether or not there are signals received by the tablet. This operation described with reference to Figure 10 and Figure 11 is exactly the same as the operation described with reference to Figures 6 through 8.

An addition to Figure 10 is the one-shot mono/multi circuit 41. The clock signal "d" is obtained by passing the signal C (C') through the one-shot/multi circuit, this one-shot mono/multi circuit 41 being equivalent to 74HC123 and the like, creating a pulse signal with a constant width based on the leading edge timing of the input signal. The reason why such a circuit may be necessary in certain embodiments will be described below.

Figure 11 shows an example in which the serially converted signal "j" is comprised of "10001101" for the pen pressure, 0 for SW1, and 1 for SW2. In the event that "1" is supplied as the signal "j", the resonance circuit is immediately shorted out, so at both edges of the resonance circuit the signal "b'" and the detection signal "c'" thereof in reality have a waveform such as "b" and "c" shown to the bottom of Figure 11. That is, since as soon as the control signal "j" of the resonance circuit rises, the signal "b" immediately dies, so the clock signal also immediately falls. However, the resonance circuit must continue to be shorted for a certain time. The reason is that in the event that the control of the circuit is disengaged before the transmitting time ends, the voltage within the resonance circuit rises undesirable to a certain extent during the remaining transmitting time. Accordingly, including a one-shot mono/multi circuit 41 enables creating of a signal maintaining a high level for a certain time event in the event that the signal C falls in a short time in the case that the returned data is "1".

A new directionality of detecting an ID code unique to the pointer has emerged in the digital communication system of certain embodiments of this invention, due to the pen pressure being converted into digital values within the pen and returned to the tablet as digital signals.

However, there is a problem in adding pointer ID information to signals that are sent from the pointer back to the tablet in that the longer the ID data, the slower the sampling speed of coordinates detection becomes. Describing the relation between ID length and sampling speed, first, in the event that the sampling speed is 203 points per second where ID detection is not performed, this is reduced to 164 points per second in the event that an 8-bit ID is attached, to 137 points per second in the event that a 10-bit ID is attached, and to 104 points per second in the event that a 16-bit ID is attached. In light of such, I considered an ID detecting method which would not decrease the sampling speed. In my system/method, pointer ID information is tranmitted in digital form from the pointer (e.g. stylus or puck) to the tablet, but not in a continuous manner. Instead, the ID information may be transmitted intermittently or alternatively only when requested by the tablet, or alternatively only when the system is initialized or originally turned on or pointer proximity detected by the overlapping loop coils of the tablet.

Pen pressure information changes in real time, but it can be thought that ID information is a value unique to the pointer and thus does not change. Thus, the ID only needs to be detected once, so detection upon request from the tablet is sufficient. I thought upon providing a command receiving function to the pen in order to realize such. Thus, whenever the tablet requests pointer ID information via digital request data sent in waves to the pointer, the pointer interprets the request and causes the circuit of the pointer to output digital pointer ID data which is transmitted back to the tablet.

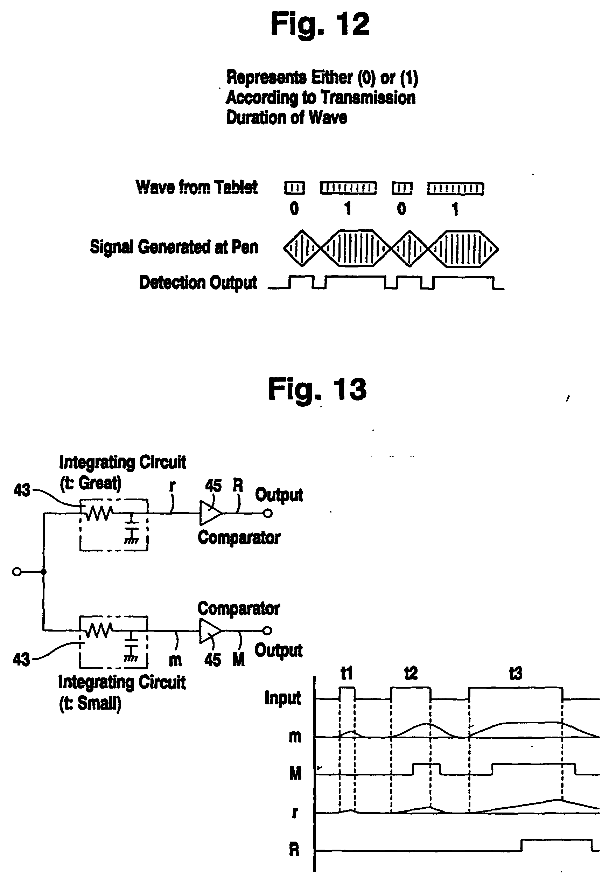

Regarding a method for performing digital communication from the tablet to the pen, the method is to represent "0" or "1" in the wave transmission duration, for a simple configuration. Figure 12 represents that method. In the figure, with the horizontal axis as time, in the event that electromagnetic or elecric waves, representing digital information "0, 1, 0, 1" by the length of wave transmission time, are received from the tablet, the signals such as shown in the figure are generated in the resonance circuit of the pointer. Detection of such obtains signals wherein the pulse width differs according to "0" or "1". Thus, when the tablet wishes to request pointer ID informatoin from the pointer, the tablet simply causes its loop coils to generate predetermined electromagnetic waves which are transmitted to the pointer in a manner [see Fig. 12] (e.g. duration sequence) such that the digital information received by the pointer indicates the ID request.

If this pulse width can be detected within the pointer, the digital code transmitted from the tablet can be detected.

Figure 13 illustrates the principles of detecting the wave transmission duration or pulse width from the tablet, according to certain embodiments of this invention. In Figure 12, the method for obtaining signals of which the pulse width changes according to the transmission time has already been described in Figure 7, and accordingly, description thereof will be omitted here. In Figure 13, there are two sets of integrating circuits 43 with differing time constants, each connected to a comparator. Also, the input of the two integrating circuits is common. Signals of which the pulse width changes according to transmitting time are input to the input terminals, as shown in the figure. That is, by means of sequentially applying three types of pulse widths, i.e., t1, t2, and t3 to the input terminal yields at the output of both integrating circuits a signal with gradually increasing voltage during pulse input.

Then the pulse is output only for the duration of the shortest t1 time, the pulse ends before the output signals of both integrating circuits 43 reach the threshold level of the comparators 45, so there is no generation of signals on the output side thereof.

Next, when the pulse is output only for the duration of the t2 time which is longer than t1, the signal m which passes through the integrating circuit with the smaller time constant rises quicker than the signal m which passes through the integrating circuit with the greater time constant, and thus an output signal m is generated only from the comparator with the smaller time constant.

Next, when the pulse is output only for the duration of the t3 time which is the longest time, pulse signals m and r (or R) are generated from the output terminals of both.

Accordingly, three types of pulse width can be identified by watching the output of two integrating circuits 43 of differing time constants. As for a method for detecting time, counters are generally used, but running a timer constant increases electric consumption, and it can be foreseen that such would make realization of a power-free in the event that the longest wave which is the burst signal is received, signals appear at both outputs "d" and "e" of the integrating circuits. The command data stored in the 2-bit shift register is transferred to the decoder at the timing of the leading edge of this signal "e", and the operation ensues so as to control the data switcher shown in the figure based on this data.

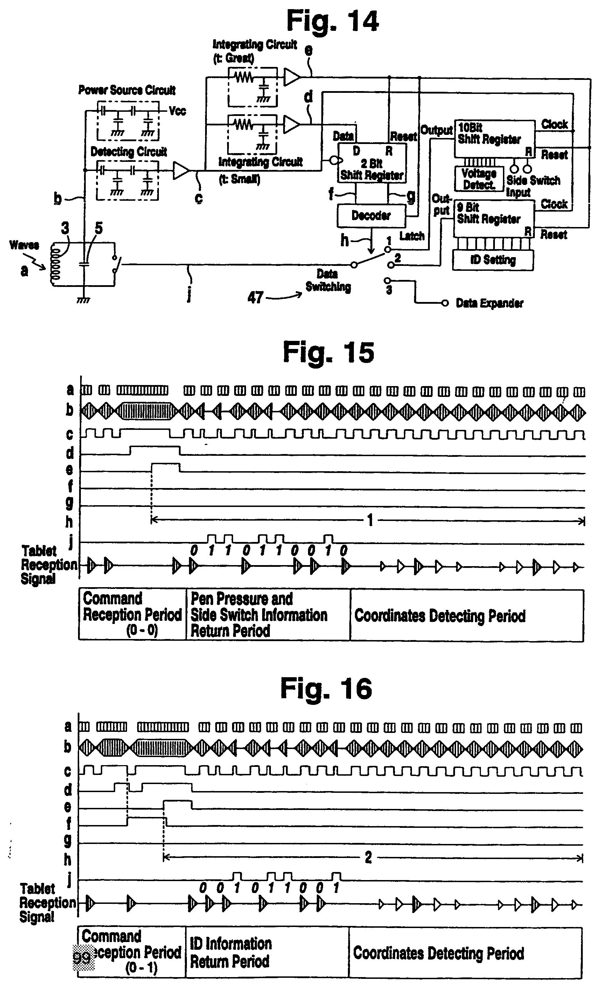

Figure 15 is a waveform diagram for each of the portions, for illustrating the operation of sending a command [0. 0] from the tablet and returning pen pressure and side switch data. Upon receiving the command [0. 0] from the tablet, the data switcher 47 shown in Figure 14 selects the first signal line, i.e., the signal line over which the total of 10 bits (comprised of pen pressure data converted in to 8-bit digital value and side switch information) is sequentially sent, and this turns the resonance circuit on or off. At this time, the signal "j" which controls the resonance circuit is sequentially sent one bit at a time, synchronously with the timing of the clock signal "c". That is to say, since the resonance circuit does not operate in the event that the data controlling the resonance circuit is [1], the tablet does not receive waves from the pen. Also, since the signal "j" does not affect the resonance circuit in the event that the data controlling the resonance circuit is [0], the tablet receives waves from the pen. Accordingly, the tablet can thus detect the state of pen pressure and the side switches, by presence/absence of received signals.

Also, while omitted from Figure 14, there is the necessity to supply a signal which has passed through the one-shot mono/multi circuit to become a constant pulse width as with that in Figure 10, in order to serve as a signal for controlling the resonance circuit.

Figure 16 is a waveform diagram for each of the portions, for illustrating the operation of sending a command [0. 1] from the tablet and 9-bit pointer ID data. Upon receiving the command [0. 1] from the tablet, the data switcher 47 shown in Figure 14 selects the second signal line, i.e., the signal line over which 9-bits is sequentially sent, and the tablet detects the ID set to the pen for turning the resonance circuit on or off.

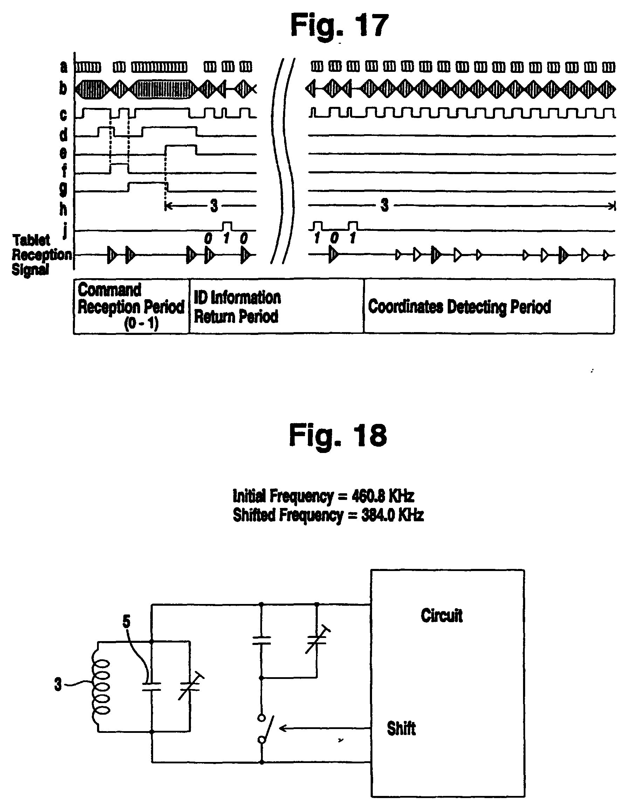

Figure 17 is a waveform diagram for each of the portions, for illustrating the operation of sending a command [1. 0] from the tablet and returning expanded data. Upon receiving the command [1. 0] from the tablet, the data switcher shown in Figure 14 selects the third signal line, i.e., the signal line over which the data is sequentially sent from the data expansion terminal, and turns the resonance circuit on or off, so the tablet detects data of a certain length sent from memory or the like connected to the data expansion terminal shown in Figure 14. Using a commercially available 64-bit fuse ROM fro the memory to be connected here and using this data as a second ID enables practically unlimited ID identification.

With regard to other uses for the command reception function, the above has been a description of a method for selectively detecting pointer ID information and pen pressure information based on requests from the tablet, using commands. The command functions can be used for other purposes as well. The pointer may be provided with a plurality of information detecting functions, and an operation can be carried out wherein only necessary information is returned in response to commands from the tablet. This is not only used in data switching, but is also indispensable in the later-described detection of rotational angle.

Conventional digitizer systems realize double device detection using a pluralities of frequencies. This is an arrangement wherein the frequency of the pen and cursor are changed beforehand, and identification is made according to difference in frequency, thus enabling simultaneous detection. While only a double device of a preset pair of pen and cursor are usable in certain conventional systems, calls for enabling double device detection with any combination have been realized.

In order to have double device detection with any combination but without interference between the two pointers, a method of simply dividing the frequency will not work. Accordingly, I have employed the method of using the above-described command receiving functions to shift the frequency of the pointer.

Figure 18 illustrates a circuit configuration for shifting the resonance frequency of the pointer upon receiving a certain command. Description will proceed with the understanding that the tablet is capable of selective output of waves of two frequencies, e.g. 460.8 kHz and 384.0 kHz.

In Figure 18, the circuit configuration is such that a condenser is added to the resonance circuit via a switch. In the event that this switch is off, the resonance frequency is 460.8 kHz, and in the event that this switch is on, the resonance frequency is adjusted to 384.0 kHz.

First, the presence/absence of a pointer, and the position thereof, is detected by transmitting waves at a frequency of 460.8 kHz. A pointer with a circuit configuration such as shown in Figure 18 has a resonance frequency of, for example, 460.8 kHz in the initial state, so the position is detected in response to the waves with the frequency of 460.8 kHz.

Once the pointer is detected, next, the tablet transmits a frequency shift command "0111" represented by 4-bits to the pointer. The pointer immediately turns the aforementioned switch on upon detecting the frequency shift command, and shifts the resonance frequency to, for example, 384.0 kHz.

Once the resonance frequency has been shifted to 384.0 kHz, the pointer does not respond to frequency of 460.8 kHz, so waves with a frequency of 384.0 kHz are transmitted to the pointer thereafter, thus maintaining detection of position and pen pressure, and so forth.

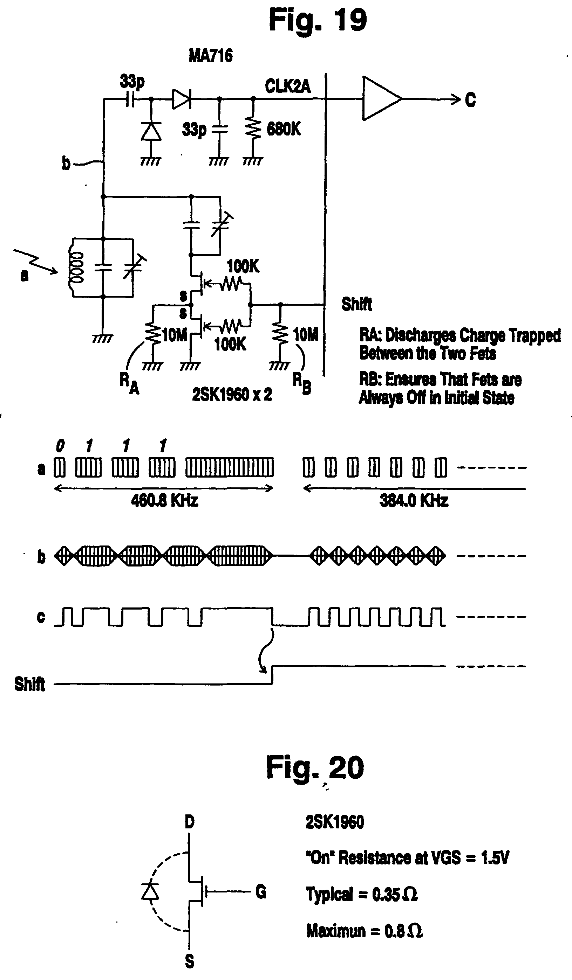

Figure 19 is a specific illustration of an exemplar frequency shifting circuit. In order to efficiently detect signals and secure power source voltage necessary even after shifting the frequency, the analog switch to be used for the frequency shifting must have extremely low resistance when on. 2SK1960 is a low-resistance MOSFET which has approximately 0.35Ω at a gate voltage of 1.5V. An exemplar device in accordance with an embodiment of this invention realizes frequency shifting using this FET.

The MOSFET generally has a parasitic diode as shown in Figure 20, and thus can only be used as a switch in the event that the drain electrode has a positive potential as to the source electrode. However, both positive and negative voltage is generated in the resonance circuit, so the MOSFETs have been connected in opposing directions. In Figure 19, the resistor RA is for discharging the electric charge trapped between the two FETs. Also, the resistor RB is for ensuring that the FETs are always off in the initial state.

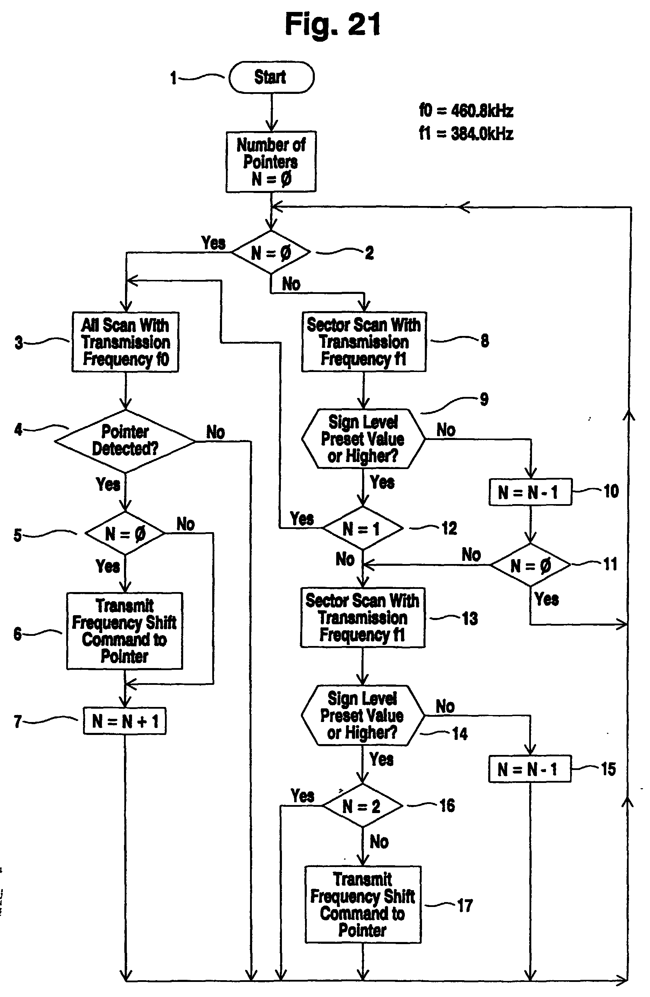

Figure 21 is an operation flowchart showing the state of the tablet in the multi-mode. The fact that double device detection of any combination can be made with the GD Series will be described with reference to this figure. Here, description will proceed representing the initial frequency of 460.8 kHz with f0, and the shifted frequency of 384.0 kHz as f1.

First, as an initial setting, the number of pointers placed on the tablet is set at 0, i.e., at N = 0 (Step 1). Next, in the event that N = 0, an all-scan operation is performed using frequency f0 in order to detect whether or not there is a pointer on the tablet (Step 3). In the event that a pointer is not detected in the all-scan operation, the flow returns to Step 2 and repeats the all-scan operation (Step 3). In the event that a pointer is detected in Step 3, the flow proceeds to the next Step 5. That is, in the event that the pointer detected in Step 3 through Step 4 is the first pointer, the frequency shift command is transmitted to the pointer, so that there is no interference with the initial frequency f0 in the event that another pointer is place thereupon (Step 5, Step 6). Also, the N of the pointer is incremented by 1 (Step 7). Transmission of the frequency shift command in this Step 6 is performed by transmitting waves at a timing such as shown in Figure 19. Once the above-described operation from Step 3 through Step 7 is completed, the flow returns to Step 2. In Step 2, the process is split according to whether or not a pointer has been detected or not. In the event that a pointer has not been detected (N = 0), the all-scan operation from Step 3 through Step 7 is repeated. Also, in the event that one or two position pointers have been detected, first, a sector scan operation (Step 8, Step 9) for detecting the coordinates of the pointer of which the resonance frequency has been changed to f1 is performed. In Step 6, once the resonance frequency of the pointer has been changed to f1, that position pointer thereafter responds to only frequency f1. Accordingly, in order to continue to obtain the coordinates value of the pointer, sector scanning is performed thereafter using waves of the frequency f1 (Step 8, Step 9, see Figure 19). In sector scanning using waves of the frequency f1 (Step 8), in the event that the reception signal level is not obtained above a certain level, judgment is made that the pointer has been removed from the tablet (Step 9), and the pointer number N is decreased by 1 (Step 10). In the event that there are no other pointers, N becomes 0, so the operation is returned to Step 2, and the all scanning operation (Steps 3 through 7) is performed (Step 11). In the event that the signal level in Step 9 is equal to or greater than a certain level, the all scanning operation (Step 3) for detecting whether another pointer has been placed on the tablet anew or not is performed at frequency f0 (Step 12). Description will now be made regarding the all scanning operation for detecting whether another pointer has been placed on the tablet anew or not, after a pointer with the frequency f1 has already been placed on the tablet. In the all scanning operation of Step 3 through Step 4, in the event that a pointer is not detected the flow returns to Step 2, and coordinates detection regarding the pointer already set to the frequency f1 is repeatedly performed (Step 2, Step 8, Step 9). In the event that a pointer is detected in the operation of Step 3 through Step 4, there is the necessity to perform the later-described sector scan with the frequency of the second pointer at f0, so Step 6 is omitted, and the pointer number is further incremented to N = 2 (Step 5 through Step 7). As described above, two pointers have been identified, one which operates at the frequency f1, and the other which operates at the frequency f0. These two pointers have differing resonance frequencies, so there are practically no effects of interference, and detection can be made of two coordinate position points. That is, in the event that these two pointers are placed upon the tablet, the tablet continuously detects the coordinate positions of these two pointers by repeatedly performing the operation of Step 8 through Step 16. The operation of Step 8 through Step 9 is performed for the first pointer set at frequency f1, and the operation of Step 13 through Step 14 is performed for the second pointer set at frequency f0. Now, in the event that judgment is made in Step 9 that the pointer operating at the frequency f1 has been removed during the operation of Step 8 through Step 16 in which the coordinate of the two pointers operating at frequency f1 and frequency f0 are alternately detected, a frequency shift command is transmitted to the remaining pointer operating at frequency f0 to change the resonance frequency from f0 to f1, so that there will be no interference in the event that another pointer is placed on the tablet again (Step 17). This Step 17 is performed in the same manner as the aforementioned Step 6.

Another characteristic, according to digitizer systems in certain embodiments of this invention, is the ability to detect rotation of the pointer 1. This also uses the aforementioned command receiving functions.

There have long been requests for pointer rotation detection. The first most likely was for electronic chalkboard erasers. In the case of electronic chalkboard erasers, two resonance circuits with differing frequencies are placed on the ends thereof, and the rotation is detected by the tablet detecting the coordinates of the two points.

Separately from this, there has been demand for detection of the rotational angle of the pen axis. This rotational angle is called "barrel rotation."

The demand for barrel rotation detection is probably not only a desire to input rotation. In the field of computer graphics, the desire to draw with non-symmetrical dots instead of circles is central here. For example, the direction in which a rectangle or oval is displayed can be easily input simply by changing the direction of the pen. In fact, there are many drawing tools on the market which take such factors into consideration. One example is a line marker, with a rectangular tip, so lines of differing thickness can be drawn according to the direction of movement. The demand for such functions is high in the field of computer graphics as well.

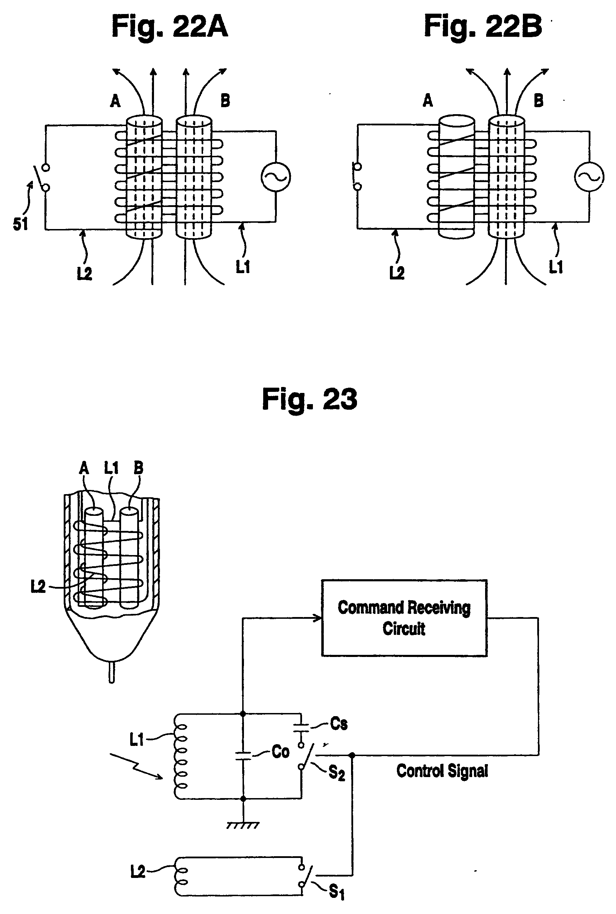

As shown in Figure 22a, two cores A and B are placed parallel, with core A being wrapped with coil L2, and core A and B then bundled and wrapped with coil L1. A switch is connected to coil L2, so that both ends can be opened and closed. Also, a high-frequency electrical power source is connected to coil L1.

Let us consider a configuration in which such a structure is built into the tip of an electronic digitizer pen. First, in the event that the switch 51 is off as shown in Figure 22a, the coil L2 is opened, and there is no effect to the electromagnetic field emitted from the cores, so uniform alternating magnetic fields are generated from core A and core B. Accordingly, the tablet detects the intermediate coordinates between core A and core B.

Next, in the event that the switch 51 is turned on as shown in Figure 22b, coil L2 is shorted out. In this case, electromotive force is generated in the coil L2 in a direction obstructing the magnetic flux of the alternating magnetic field generated by the alternating current flowing from coil L1, and consequently, the alternating magnetic field does not easily flow through the core A would with the coil L2. Accordingly, the magnetic flux is centered in core B, so the coordinates of the position of the core B is detected by the tablet.

Thus, the rotational angle of the pen can be calculated by finding out the coordinates of the two points corresponding with opening and closing of a switch(es) 51.

Figure 23 shows a configuration for rotational angle detection. Two cores, A and B, are arranged at the pen tip, in the same manner as that shown in Figure 22, with core A being wrapped with coil L2, and core A and B then bundled and wrapped with coil L1. A switch S1 is connected to coil L2, and a condenser C0 is connected to the other coil L1, thus comprising the resonance circuit. A condenser Cs is connected to this resonance circuit via switch S2.

A command receiving circuit is connected to this resonance circuit, so as to output control signals in the event that certain commands are received from the tablet in the form of waves. The control signals control both switch S1 and switch S2 simultaneously. The command receiving circuit use here is similar to the command receiving circuit shown in Figure 14. That is, a digital code represented by transmitting duration from the tablet is detected by two types of integrating circuits, and control signals are output only in the case that a code predetermined for detection of rotational angle is received. The timing at which the control signal is output is the timing at which the burst ends, identical to the case of frequency shifting (see Figure 19).

The operation of this circuit will be described below. First, the coil L1 and condenser Co are adjusted beforehand to resonate with the wave frequency from the tablet. Control signals are not being generated in the initial state, so the coil L2 is off, and thus the tablet detects the coordinates of the intermediate position between coil A and coil B, as described earlier.

Next, a certain command is transmitted from the tablet for detecting the rotational angle. Once the command receiving circuit of the pointer receives this command, control signals are generated, turning switch S1 and switch S2 on. When switch S1 is on, the magnetic flux is centered in core B, so the coordinates of the position of the core B is detected by the tablet. The reason that the condenser Csis added with the switch S2 is to supplement the dropped impedance in coil L1 owing to the coil L2 shorting, thus maintaining the resonant frequency constant.

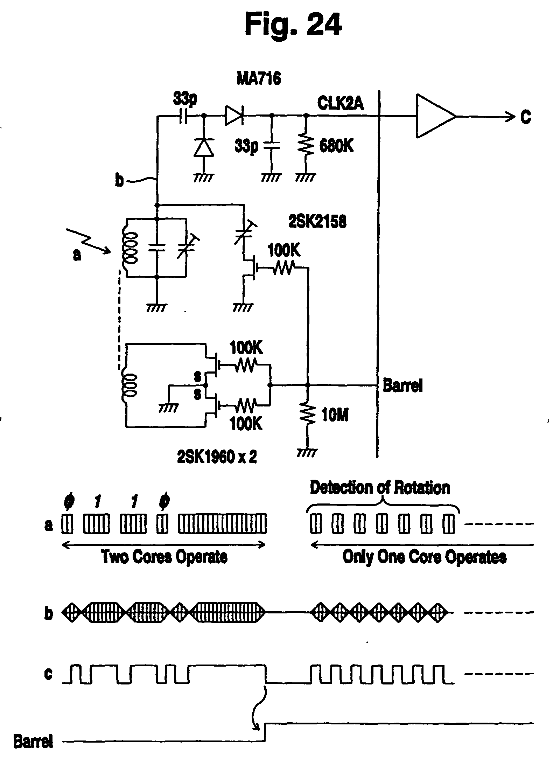

Figure 24 is a specific illustration of a control circuit for rotational detection (i.e. detecting the rotational angular position of the pointer [e.g. stylus]). As for the analog switch for opening and closing coil L2, such with a low "on" resistance value is required, the same as with frequency shifting, so 2SK1960 is used here as well. On the other hand, such a low "on" resistance is not required for the analog switch adding Cs, so 2SK2158 is used here since there is little floating capacity and can be controlled with low voltage. Slight negative voltage is generated at the drain terminal here, but this is small compared to the forward voltage (approximately 0.7 V) of the parasitic diode, so sufficient control can be made with a single FET.

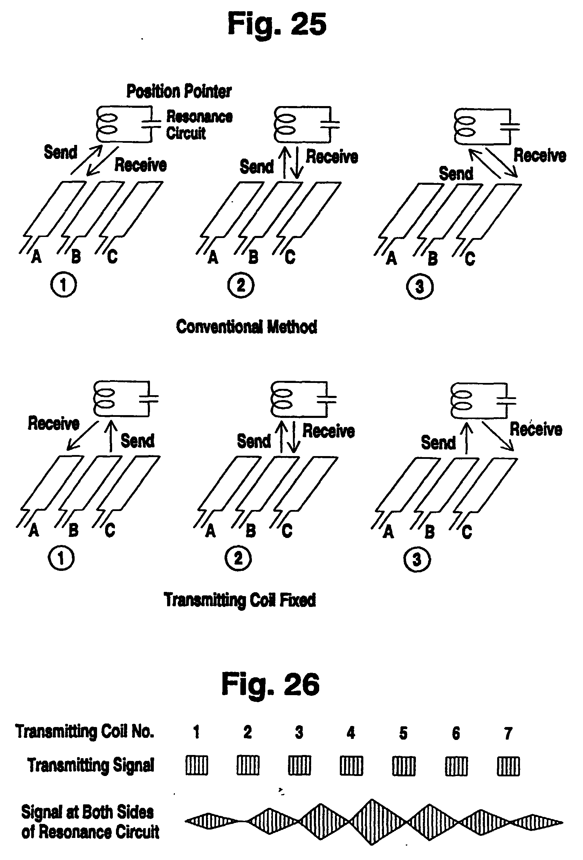

Description will be made regarding fixed scanning of the transmitting coil. Figures 25 is an illustration showing the difference between a conventional scanning method and the fixed transmitting coil scanning method according to certain embodiments of this invention. Conventional scanning (i.e. the upper half of Fig. 25) is performed by sequentially switching a coil to perform transmitting and receiving, but the same coil has always been selected for both transmitting and receiving. This has been advantageous with regard to coordinates resolution, since the difference in distance between the coil and pointer works doubly. On the other hand, with the transmitting coil fixed scan, the coil closest to the pointer always transmits, and only the receiving coil is scanned.

Now, description will be made regarding why the transmitting coil fixed scan method in the lower half of Fig. 25 was used for the digital communication system. The pointer in the digital communication system rectifies high frequency signals generated in the resonance circuit to obtain an electric power source. Part of the signal components generated in a resonance circuit to which such a power source circuit is connected is absorbed by the power source circuit. Let us say that a conventional center scanning operation is made from the tablet to such a pointer. Figure 26 shows the signal voltage on both sides of the resonance circuit at that time. The induction voltage is greatest when the transmission is from the closest coil, and decreases as the coil is distanced from the pointer. However, the greater the induction voltage is, the more electric power is absorbed by the power source circuit, so consequently, signals cut at a certain level are generated in the resonance circuit for about three coils, as shown in the figure. Accordingly, this causes a problem in that accurate coordinate calculation cannot be made since the signals received at the tablet do not have a constant distribution of signal level from the coils necessary for coordinate calculation.

Accordingly, in order to solve this problem for the digital communication system, an arrangement has been employed to fix the transmitting coil when performing the sector scan, thus facilitating generating voltage at the resonating circuit at a constant level. The receiving coil scans, so a signal level corresponding to the distance with the pointer is detected at the tablet, thereby enabling coordinates calculation.

In this case, the difference between the coil and pointer only works when receiving, so it can be said that the level difference from each coil is smaller than that of the conventional method, and thus this method is disadvantageous with regard to coordinates resolution. However, the required coordinates resolution of 0.01 mm has been realized by making the A/D converter to be 10-bits.

Another item for enabling the digital communication system is the plurality of transmitting/receiving timing combinations that can be made, regarding which description will now be made. The digital communication system uses waves from the tablet as timing signals for the pointer. Accordingly, there is the need to perform continuous transmission called a burst, separately from conventional scanning timing.

Also, commands to the pointer are represented by transmitting duration, so at least three types of transmitting times must be settable. Accordingly, certain embodiments of this invention incorporate a design in which the transmitting/receiving timing can be freely set by means of firmware.

The above has been a description of the two indispensable items to the GD tablet, and the following is a description of other items shown in Figure 25.

With regard to the number of coil turns, the conventional two turns is somewhat insufficient for supplying sufficient electrical power from the tablet to the pointer. Accordingly, I have drastically increased the number, and used an 8-turn sensor coil preferably from 4 to 20 turns, and most preferably from 6 to 10 turns). The coil pitch of 6.4 mm used with the UD Series is too narrow for eight turns, so a coil pitch of 10.4 mm was employed. This figure of 10.4 mm is based on the fact that this is a pitch at which exactly both side lobes are included upon scanning seven coils.

Giving consideration to low-end machines with limited functions and capabilities, 460.8 kHz was selected from the frequencies obtained by dividing 3.686 MHz which is the baud rate clock of the RS232C, being close to the well-proven 500 kHz.

The other frequency selected was 384.0 kHz which is 5/6 times thereof, in order to prevent the signal level from dropping very much at the time of frequency shift, and also due to little interference at the time of operation.

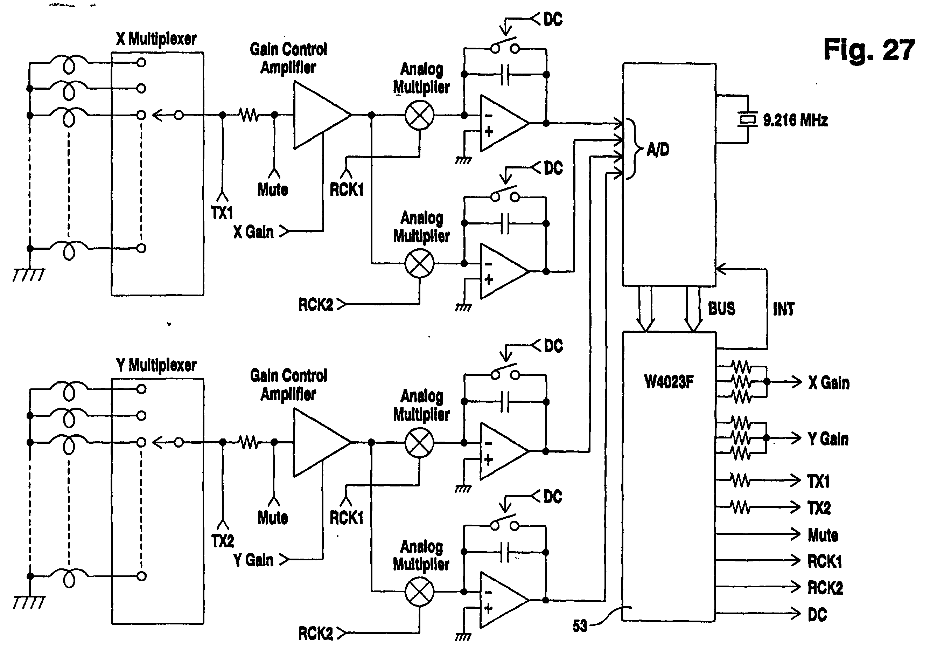

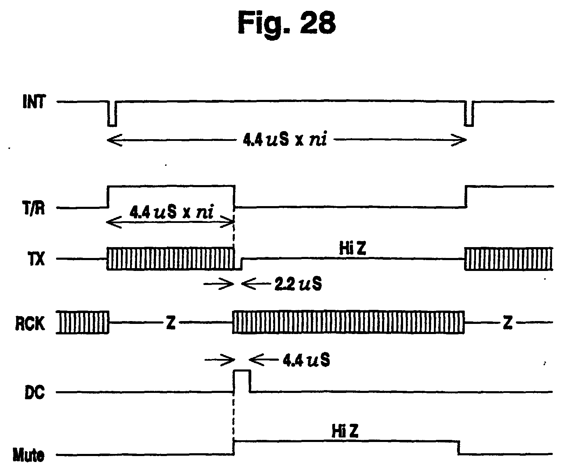

Figure 27 is a general configuration of a digitizer tablet according to an embodiment of this invention. Figure 28 is a diagram illustrating the operation timing of the various signals thereof.

Brief description will be made regarding the configuration shown in Figure 27. This is comprised of a 16-bit micro-computer (e.g. Hitachi 300H), CMOS gate array (e.g. W4023F) 53, analog multiplexer (74HC4051), and analog circuit.

The reason why transmitting/receiving circuits are provided independently for the X-axis and Y-axis will be first described. With the system, pen pressure resolution of 1024 steps (10-bit) was utilized. In order to realize such at least 512 waves to be counted at the time for digitizing the pen pressure, as described later. Taking the delay time of the integrating circuits into consideration, a burst period of at least 2 mS is necessary. Further, time required for returning the total of 12-bits (pen pressure 10-bits + side switch 2-bits) is 150 µS x 12, necessitating 1.8 mS. Combining everything, 3.8 mS is used for pen pressure detection, so in order to achieve the same sampling speed as the UD Series, coordinates detection had to be made in the remaining 1.2 mS. This is what necessitated simultaneous detection of the X-axis and Y-axis. The reason that simultaneous detection of X and Y can be performed is because fixed transmitting coil scanning is being performed.

The transmitting signal directly supplies clock output from the TX* terminal of the gate array via the multiplexer. An appropriate resistor is inserted so that the current flowing through the multiplexer is kept to 20 mA or lower.

The analog circuit performs synchronous detection as described above, and one W6005S is used for each axis. The detecting clocks RCK1 and RCK2 supplied to the W6005S are square waves generated by the gate array W4023F. These RCK1 and RCK2 are arranged by the firmware so that phases thereof are offset by 90°C. The reason why the synchronous detecting circuit has been divided into two phase components for detecting is in order to improve coordinates resolution by mean square with the 0° component and 90° component.

In Figure 28, signal INT is an interruption signal from the gate array to the micro-computer, representing a single transmitting/receiving period. As soon as this interruption signal is entered, the micro-computer immediately starts A/D conversion of four channels, and sets the conditions for the next cycle (transmitting/receiving) to the gate array.

In Figure 28, T/R is a signal representing the transmitting period, with a 460.8 kHz (or 384.0 kHz) transmitting signal being output from TX (1, 2) during this period. Other periods (receiving periods) have high impedance, but there is low level for a period of about 2.2 µS, in order to suppress switching noise. Also, regarding the receiving period, a detecting clock of the same frequency as the transmitting signal is output from RCK1 and RCK2. This clock can be set at 45° intervals by the firmware, and in reality, can be used with a setting on which RCK1 and RCK2 are offset by 90°.

MUTE is high-impedance during the receiving period and does not affect the transmitting/receiving circuit, but is low level during the transmitting period, thereby absorbing signals filtering into the receiving amplifier.

Still referring to fig. 28, DC is a signal for discharging direct current signals held in the integrating circuits which are the final step of the receiving system, and discharge for 4.4 µS following completion of transmission allows signals detected in the subsequent period to be accumulated from zero.

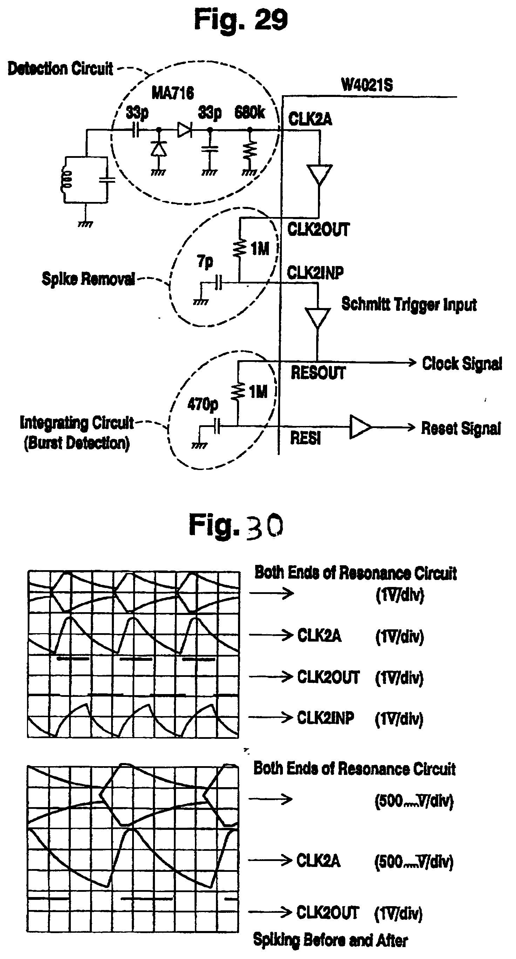

In the tablet using the digital technique for communication with the pointer, the clock signal is important. The technique of extracting the clock signal has already been described above with reference to Figure 7. Figure 29 shows a specific example of the circuit. The operating waveforms of the circuit are shown in Figure 30.

This clock extraction circuit employs a detector circuit based on the voltage doubling technique using Schottky barrier diodes. The time constant of this detector circuit is determined by the values of a capacitor and resistor used. The time constant is selected such that the envelope of the signal induced in the resonant circuit is obtained at the output of the detector (refer to Figure 30) . The transmission and reception timing is selected so that the transmission period = 50 µsec and the reception period = 100 µsec. The above value for the transmission period is determined taking into account the fact that it takes at least 50 µsec for the resonance signal to become saturated in the transmission operation, although the time required for saturation depends on Q of the resonant circuit. The reception period is determined as 100 µsec because it takes about 100 µsec for the signal induced in the resonance circuit to attenuate to a sufficiently low level after the transmission is stopped.

The detected signal (CLK2A in Figure 30) is shaped in waveform by a digital integrated circuit (the shaping of the waveform is performed by thresholding the signal at a level close to 1/2 of the power supply voltage). The shaped signal CLK2OUT cannot be directly used as the clock signal, because spikes appear before and after the signal CLK2OUT as shown in Figure 30. To remove the spikes, the signal CLK2OUT is passed through an integrated circuit consisting of a 1 MΩ resistor and a 7 pF capacitor, and then applied to a buffer circuit with a Schmitt circuit at its input. Thus, finally, a signal which can be employed as the clock signal is obtained at the output of the buffer circuit.

The reset signal shown in Figure 7 is obtained by passing the clock signal though an integrating circuit consisting of a 1 MΩ resistor and a 470 pF capacitor. The period of the burst signal transmitted from the tablet is detected by this resent signal. That is, the reset signal indicates the starting timing of transmitting digital data from the pointer. The reset signal is also used in the operation of converting an analog quantity such as a pen pressure to a digital signal. Furthermore, when a command is transmitted from the tablet, the reset signal indicates the end of the command (Figures 15-17, 19, and 24).

In the digital pen technique, the analog signal representing the pen pressure is converted to a digital signal in the pointer, and the resultant digital signal is transmitted to the tablet. As described earlier, the conversion is performed by converting the pen pressure to the width of a pulse, and then counting the width of the pulse using the clock signals extracted from the radio wave generated by loop coils of the tablet (refer to Figure 8).

In the circuit shown in Figure 8, a positive pulse (reset signal) is applied to the integrating circuit for detecting the pen pressure. However, in practical devices, the inverted pulse (GATE) is used for the reason described below. In GD devices, a 64-bit fuse ROM (S-2100R) storing ID data is used. This ROM needs a reset signal in the negative logic form. To meet the above requirement, negative pulses are generated during the burst period. These pulses are also used in the operation of detecting the pen pressure so as to minimize the number of pins of the integrated circuit. For the above reason, the signal GATE used is opposite in polarity to the signal (e) shown in Figures 15-17.

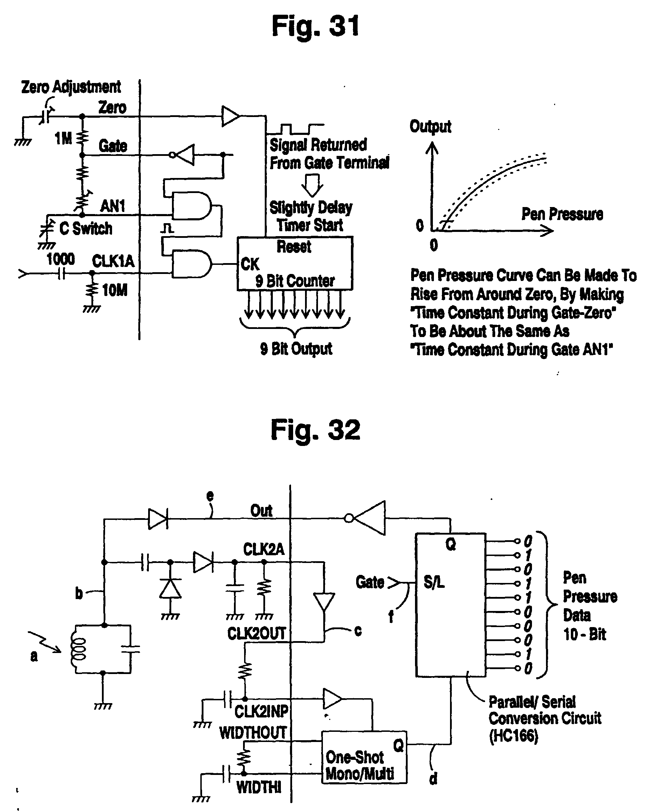

With regard to zero point adjustment, the pen pressure is detected by detecting the delay time resulting from the circuit with the time constant whose capacitance component is given by the C switch unit. However, the C switch unit has an initial capacitance which appears even when the pen pressure is zero. This means that a circuit produces a certain output value not equal to zero when the pen pressure is zero. To compensate for this non-zero value, the zero-point adjustment circuit shown in Figure 31 is used. This zero-point adjustment circuit serves to make the counter start its counting operation after a slight delay since the GATE signal became low.

In this Fig. 31 circuit, if the time constant between GATE and ZERO is set to be substantially equal to the time constant between GATE and AN1, the pen pressure-output curve arises at a zero value.

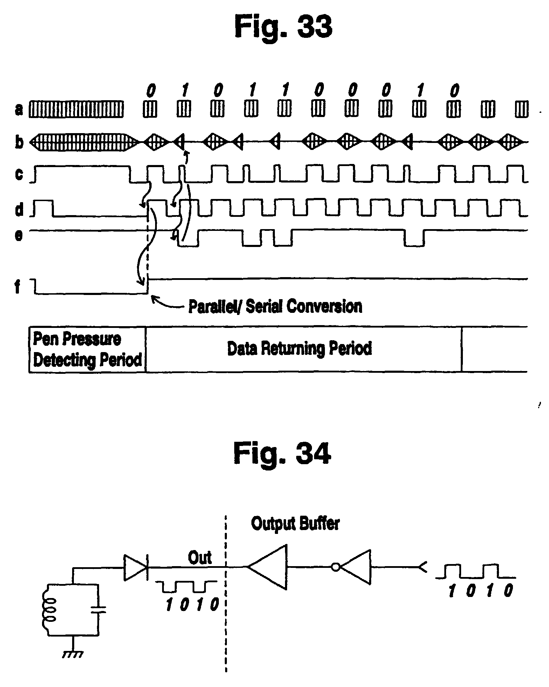

Figure 32 illustrates the circuit for returning (transmitting) the pen pressure data obtained by a circuit which detects the least significant bit. Figure 33 illustrates the waveforms of signals at various points in the circuit shown in Figure 32.

This operation of the circuit is based on the principle described earlier with reference to Figures 6, 10, and 11. In Figure 32, the part for extracting the clock signal from the signal given at the CLK2INP terminal is the same as that shown in Figure 29. The extracted clock signal is applied to a parallel-to-serial converter through a one shot monostable multivibrator as shown in Figure 32 for the reason described earlier with reference to Figures 10 and 11. The parallel-to-serial converter used herein is equivalent to 74HC166. The one shot monostable multivibrator is realized with a D-flip flop (such as 74HC74).

A CR circuit is connected to the one shot monostable multivibrator, wherein the time constant of this CR circuit is determined so as to satisfy the following conditions in terms of the timing of the falling edge of the output pulse.
① The falling edge should occur after the end of the transmission.
② The falling edge should occur before the start of the following transmission.

The reason for the above-requirements will be apparent from the discussion described above with reference to Figures 10 and 11.

The resonant circuit is switched on and off using the diode connected to the OUT terminal shown in Figure 32 (the diode serves as the switch shown in Figure 6 or 10). The switching on and off is performed in response to the control signal OUT. Figure 34 illustrates the operation of switching on and off the resonant circuit. As shown in Figure 34, the control signal applied to the diode is the inversion of the switching signal (to be transmitted).

When the signal at the OUT terminal is at a high level (and thus when the transmitted signal is at a low level or "0"), the diode is reversely biased. As a result, the OUT signal does not exert any influence on the resonant circuit. Thus the resonant circuit is enabled and the tablet receives a signal from the pen.

On the other hand, when the OUT terminal is at a low level (and thus the transmitted data is at a high level or "1"), the signal induced in the resonant circuit is cut off in its half cycle. In the remaining latter half of the cycle, the signal rapidly attenuates because of rather high Q of the resonant circuit, and tablet receives no signal.

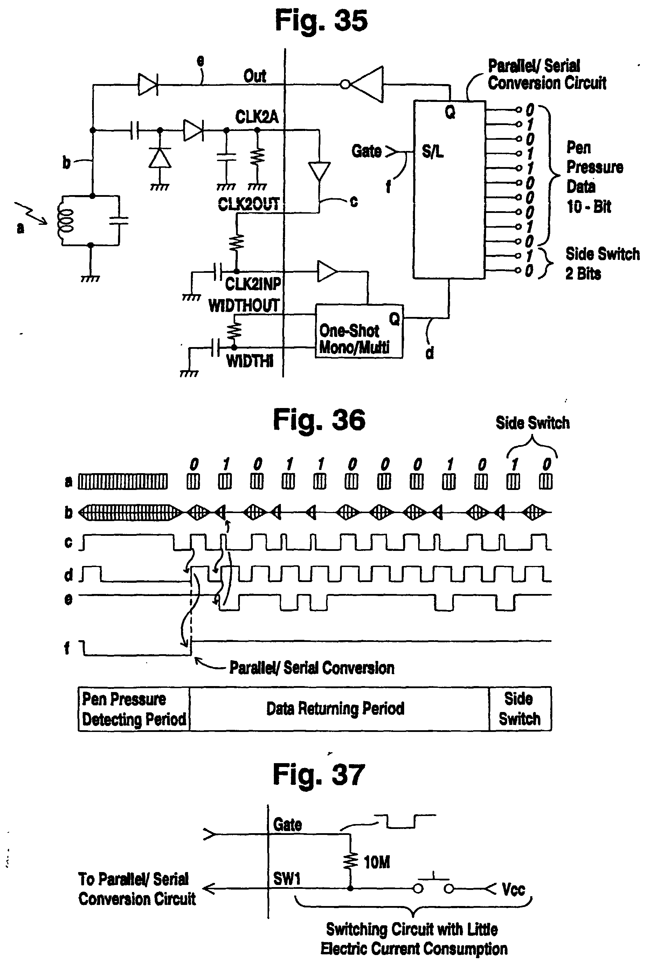

To realize a good performing pen, the pen may have two side switches. Figure 35 shows an example of a manner in which two switches are provided in the circuit. This circuit is similar to that shown in Figure 32 except that the number of inputs of the serial-to-parallel converter is increased from 10 to 12. That is, an additional 2-bit signal associated with the side switches is transmitted following the 10-bit pen pressure data. Figure 36 illustrates the operating waveforms of this circuit.

Figure 37 shows the circuit for detecting the status of the side switches. In the technique widely employed, the circuit for detecting the status of the switches is constructed by connecting a switch and a pull-up resistor to the input of a CMOS circuit so that the input of the CMOS circuit is pulled up to the power supply voltage through the pull-up resistor. However, this technique needs a large current consumed in the circuit. To avoid this problem, the circuit is adapted such that a current flows from the terminal GATE only negative pulse periods as shown in the figure. The negative pulses are generated by detecting the burst periods and are used in common in the pen pressure detection and also used as a reset signal to the ROM.

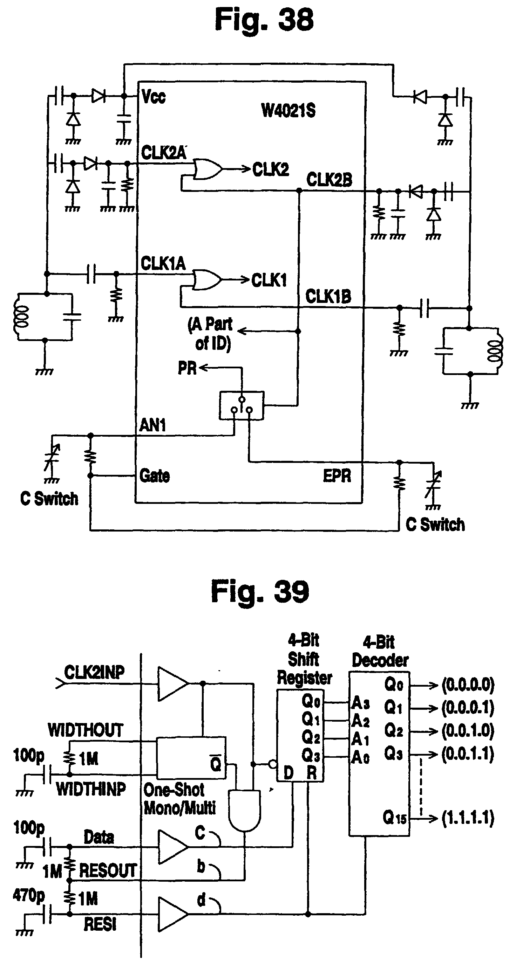

The reason why the switch signal is required to be detected only during the GATE period is described below. As described earlier, the pen pressure data is held at the end of the burst, and transmitted bit by bit during the following data returning period. If the status of the switches is also held when the pen pressure is held, then the switch circuit shown in Figure 39 is sufficient for the purpose.

Pointer eraser capability is realized using the technique shown in Figure 38. In the devices with the eraser capability, two resonant circuits are required. The counter for detecting the pen pressure and the signal terminal GATE are used in common by two sets of circuits. Because there is no possibility that both resonant circuits generate a signal at the same time, two clock signals CLK1 and CLK2 are simply passed through an OR gate. The clock signals are switched depending on the which resonant circuit has an induced signal so that the pen pressure is detected from the correct C switch.

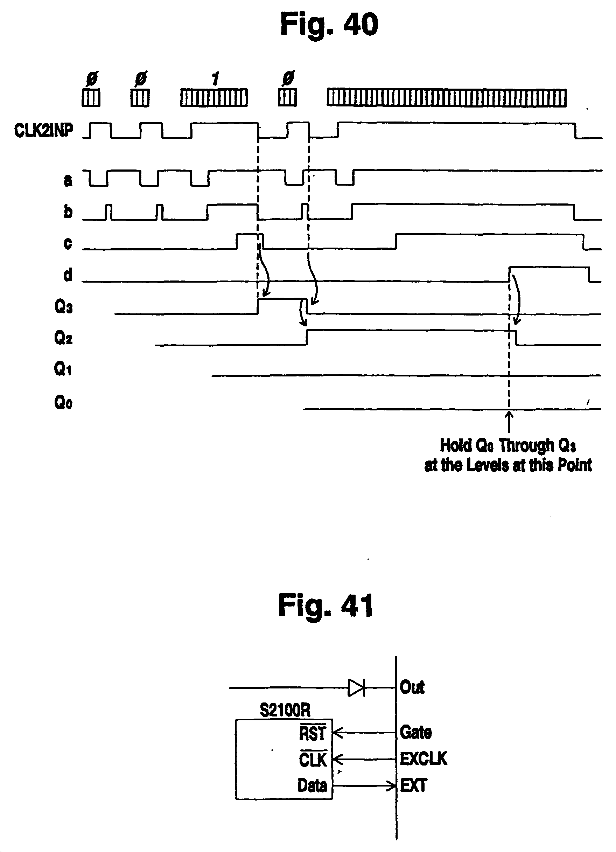

The receiving operation of commands has already described earlier with reference with Figures 12-17. Figure 39 illustrates a specific example of a command receiving circuit. Figure 40 illustrates waveforms of signals at various points in this command receiving circuit for the case where a command "0010" is transmitted from the tablet.

Commands transmitted from the tablet are represented in a digital form consisting of 0s and 1s wherein 0s and 1s are distinguished from each other by difference in the length of their transmission period. The digital signals are detected by two seats of integrating circuits as described earlier. In Figure 39, one integrating circuit is disposed between RESOUT and DATA and the other one is disposed between RESOUT and RESI.

As shown in Figure 39, the command receiving circuit includes a one shot monostable multivibrator similar to that used in Figure 32. In this circuit, and AND operation is performed between the inverted output of the one shot monostable multivibrator and the clock signal so as to expand the ratio of the transmission period of "1" having a rather long period to that of "0" thereby ensuring that the two integrating circuits can have a large enough margin in distinguishing three different pulse widths. The resultant signal is passed through the two integrating circuits, and the commands are detected on the basis of signals c and d output by the respective integrating circuits.

The clock signal obtained by shaping the waveform of the CLK2INP signal is applied to the clock terminal of the 4-bit shift register. The data stored in the shift register is shifted at each falling edge of this clock signal. The value applied to the data terminal D is held at the least significant bit of the shift register. When the 4-bit shift register initially holds 4-bit data "0000", if a command "0010" is entered bit by bit as shown in Figure 40, and if a burst signal is transmitted following that command, then the operation occurs as follows.

If the first bit "0" in the command is received, the shift register acquires the value of the signal c at the falling edge of CLK2INP and puts it at the least significant bit Q0. At this time, the signal c is at a low level, and thus the data held in the 4-bit shift register is still "0000".

If the second bit "0" is received, the shift register again acquires the value of the signal c at the falling edge of CLK2INP and puts it at the least significant bit Q0. At this time the signal c is also at a low level, and thus no change occurs in the data "0000" held in the 4-bit shift register.

If the third bit "1" is received, the shift register again acquires the value of the signal c at the falling edge of CLK2INP and puts it at the least significant bit Q0. At this time the signal c is at a high level, and thus the data held in the 4-bit shift register becomes "0001".

If the fourth bit "0" is received, the shift register again acquires the value of the signal c at the falling edge of CLK2INP and puts it at the least significant bit Q0. In this case, since the signal c is at a low level, the data held in the 4-bit shift register becomes "0010".

The 4-bit signal is output to a 4-bit decoder. This 4-bit decoder has a latch at its input terminals whereby the data from the shift register is accepted and held only at rising edges of the signal d.

If the burst signal is received following the 4-bit data, the signal d rises up after a predetermined delay. At this rising edge of the signal d, the data "0010" held in the 4-bit shift register is transferred into the 4-bit decoder. In this way, the command from the tablet is completely received.

Following the burst period, there is a data returning period in which data is returned or the required operation such as the rotation control or the frequency shift is performed, in accordance with the received command.

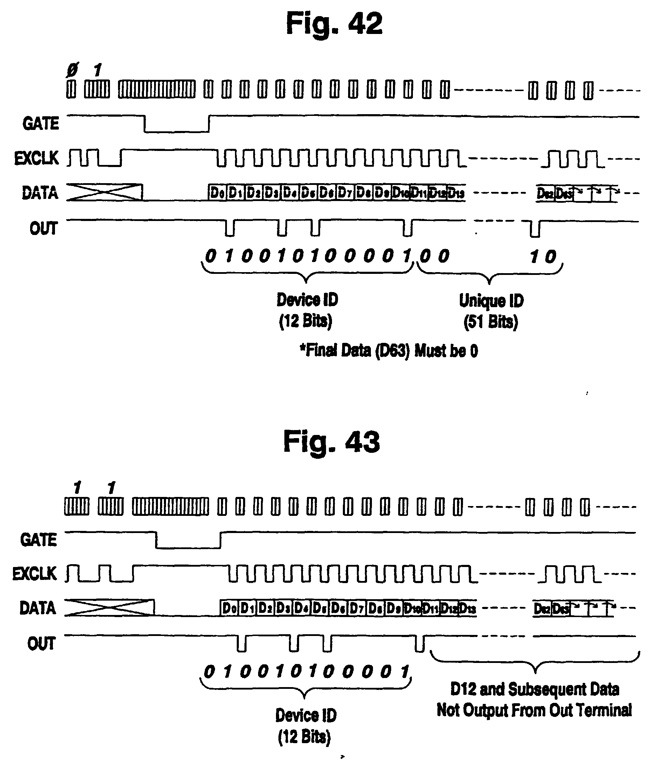

The integrated circuit developed for dedicated use has terminals for direct connection to a 64-bit fuse ROM (S-2100R). The specific connection is shown in Figure 41. To supply a clock signal to this fuse ROM, a signal EXCLK is generated as shown in Figure 42. According to the specifications of this ROM, shifting of data is started in response to a falling edge of the clock signal, and the shifting operation is finished before the following rising edge of the clock signal. This means that the outputs at DATA terminals are uncertain during the periods in which EXCLK is at a low level. To avoid the uncertainty, the output signal (EXT) is subjected, in the inside of the integrated circuit, to operation of AND with the output of the one shot monostable multivibrator described above, and the resultant signal (in practice, the inversion of this signal) is output through the OUT terminal.

In general, the ID of the pointer does not always need 64-bits. In view of the above, the first 12-bits are assigned to the device ID (indicating the type of the pointer), and the circuit is designed to be capable of detecting only these 12-bits.

Figure 42 illustrates the operation in which a command "**01" is transmitted from the tablet to read all data from the ROM. Of 64-bit data written in the ROM S-2100R, the last one bit should be "0" so that after completion of the transmitting/receiving period for the detection of the ID data, it is required to further perform transmitting/receiving operations for detecting the coordinates. During the period for the coordinate detection, the clock signal is still generated in the pointer. However, S-2100R is designed to continuously output the last data when as many as 64 or more clocks are input. This specification limits the number of bits which can be actually used to 63.

Figure 43 illustrates the operation in which a command "**11" is transmitted from the tablet to detect only the 12-bit device ID. As described above, S-2100R shifts the data and outputs it in response to each clock. Thus, the integrated circuit includes a counter circuit which allows only the first 12-bits to be output through the terminal EXT and prevents the following data from being output.

The principle of the technique of shifting the frequency in the multiple mode has been described earlier with reference to Figures 19 and 20. What is important here is the control voltage of the FET 2SK1960 serving as the analog switch. 2SK1960 can be controlled by a control voltage of 1.5 V and has a low on-resistance. The power supply voltage required in the pointer is discussed below. The gate array developed for use in the pointer is based on the LZ96 series low voltage process technique provided by Sharp Corp. In this technique, the operation at a voltage of as low as 0.9 V is guaranteed. When the gate array is used at a frequency of 500 kHz, the minimum guaranteed voltage is 1.0 V. On the other hand, the serial ROM S-2100R needs a voltage of at least 1.1 V during the data reading period. As for 2SK1960 used here to produce the frequency shift, the on-resistance guaranteed by the specifications under the control voltage of 1.5 V is 0.8 Ω. To effectively perform the frequency shift, it is experimentally required that the on-resistance of the FET should be less than 2 0. Although it is possible to select good devices which have an on-resistance less than 2 Ω for a control voltage of 1.1 V, a great number of devices may be rejected in the selection. If the power supply voltage is increased to 1.5 V to avoid the above problem, the transmission power is also increased to a significantly high level.

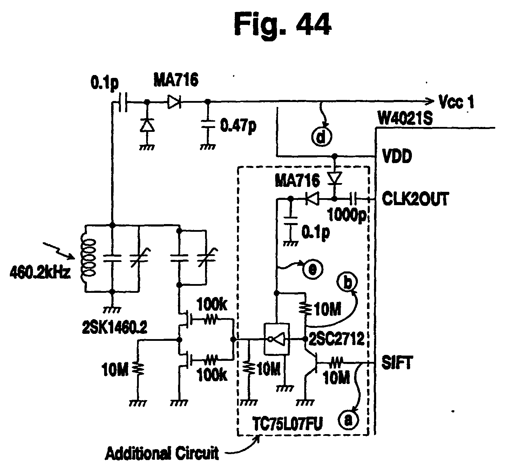

In view of the above, only the control signal voltage applied to the FET is increased. Figure 44 shows the circuit including the additional part for increasing only the control signal voltage. A second power supply voltage is produced by performing voltage-doubling rectification on the clock signal (CLK2OUT) extracted during each transmission/reception period. In Figure 44, a transistor 2SC2712 is used to change the level of the control signal (SIFT) supplied from the integrated circuit. This circuit can produce a control voltage of about 1.8 V even when the power supply voltage is as low as 1.0 V.

W4021S may be used in certain embodiments of this invention.

### (1) Outline

W4021S is a gate array developed as an integrated circuit for use in pointers having the capability of digital communications.
Manufacturer: Sharp Corp.
Product Name: LZ96650 (650 gates)
Package: 28-pin TSOP
Features:
   ① A high pen pressure detection resolution as high as 1024 bits is achieved.
   ② Up to three different analog data and 8-bit switching data can be detected.
   ③ An external serial ROM (S-2100R) capable of writing 63-bit ID data can be directly connected to W4021S.
   ④ There is provided a terminal for outputting a rotation detection control signal used in rotation detection.
   ⑤ Up to two resonant circuits can be connected so as to realize the eraser pen capability.
   ⑥ There is provided a frequency shift control terminal for use in the multiple mode.
   ⑦ In addition to the pen pressure, it is also possible to detect the status of the side slider (dial).
   ⑧ A 28-pin TSOP package is employed so that the integrated circuit can be installed in a pen.
   ⑨ It is possible to detect the status of the mid-point return lever (slider) with a resolution as high as ±1024 levels.

W4021S includes a command receiving circuit for receiving 4-bit digital data transmitted from the tablet by means of digital communication, a data transmitting circuit for transmitting digital data depending on the received command, and a circuit for detecting an analog quantity (such as a pen pressure) represented by a change in capacitance or resistance. With these elements, the tablet and the digital pen communicate with each other by means of bidirectional digital communications.

W4021S performs a predefined operation depending on the command received from the tablet.

Of various operations predefined for the respective commands, the transmission of ID data (*011), the frequency shift (*111), and the transmission of 63-bit ID data (**01) are common for all modes.

It is also possible to return infinite serial data input through the EXT terminal of W4021S (command: **01). When the 64-bit fuse ROM (S-2100R) is used, the last bit should be "0" as described above. As a result, when a command "**01" is received, 63-bit ID data is returned. In this case, the first 12-bits are used to describe the device ID which is returned in response to the command "*011".

### ① 3-D Mode (D0 = 1, D0 = 1)

In order to adapt to the mid-point return side lever, there are two analog input terminals. The signals at these two terminals are compared with each other in terms of the delay time, and only the signal having a greater delay time is converted to 10-bit digital data. An additional 1-bit data indicating which input terminal is selected is combined with the 10-bit data, and the resultant 11-bit data is returned (command: **00).

5-bit switch data defined through the five input terminals can be returned (command: **10).

### Applications of the 3-D Mode

- 3-D input device with 5 buttons and a mid-point return lever.
- Pointing pen.
- Pointing pen with a 32-level switch.

### ② Eraser Mode (D0 = 1, D1 = 0)

In the eraser mode, three analog input terminals can be used to perform detection in terms of the eraser and side slider (dial) in addition to the pen pressure.

Two resonant circuits can be mounted on the pen-side and the eraser-side, respectively. When a signal (CLK2A) is input from the pen-side resonant circuit, 12-bit data consisting of two side switch data and 10-bit data detected from the signal given through the AN1 terminal is returned. On the other hand, if a signal (CLK2B) is input from the eraser-side resonant circuit, 12-bit data consisting of two side switch data and 10-bit data detected from the signal given through the ERR terminal is returned (command: **00).

When a command **10 is received, 10-bit data associated with the side slider detected from the signal given through the AN2 terminal is returned (command: **10).

### Examples of Applications of the Eraser Mode

- Pen with 2SSW and an eraser.
- Pen with 2SSW, eraser, and a side slider (air brush).

### ③ Barrel Mode (D0 = 0, D1 = 1)

In this mode, detection of rotation, pen pressure (AN1 terminal) and side slider, pen side-dial, (AN2 terminal) is possible. This mode is also applicable to a side lever of the mid-point return type in which the signals at the AN1 terminal and the ERR terminal are compared with each other, and a signal with a greater delay is transmitted as 10-bit digital data.

When a command 0010 is received, 14-bit data consisting of the 10-bit data obtained by converting the signal having a greater delay of those at the AN1 and EPR terminals, 1-bit data indicating which signal is selected, and 3-bit switch data defined through the three input terminals (command: 0010).

When a command 1010 is received, 10-bit digital data obtained by converting the signal (side slide) given through the AN2 terminal is transmitted (command: 1010).

When a command *110 is received, the BARREL terminal becomes high. If the magnetic flux distribution of the resonant circuit is changed in response to the low-to-high transmission of this signal, the tablet can obtain a second coordinate value which can be used to detect the rotation angle. After receiving this command, no data is transmitted (command: *110).

To reset the rotation detecting state set by the command *110, it is required to transmit a command **00 from the tablet. On receipt of this **00 command, the signal at the BARREL terminal is changed to a low level. However, no data is transmitted (command: **00).

### Applications of the barrel mode

- Rotation detecting air brush.
- Rotation detecting pen with a 3-bit switch.
- 3-D puck with 3 buttons, rotation detecting capability, and a mid-point return lever.

### ④ Cursor Mode (D0 = 1, D1 = 1)

In the cursor mode, 8-bit switch information defined through 8 input terminals is returned from the pen (command: ***0).

### Applications of the Cursor Mode

- Multiple button cursor.

### (3) Operating Conditions

Power Supply Voltage: 1.0 - 3.0 V
Maximum Clock Frequency: 500 kHz

### (4) Terminals

- CLK2A: Input terminal of the detected signal derived from the signal developed in the resonant circuit.
- CLK2B: Input terminal of the detected signal derived from the signal induced in the eraser-side resonant circuit. This terminal acts as a switch input terminal (SW3) in modes other than the eraser mode.
- CLK2OUT: The signal input through CLK2A or CLK2B is output through the terminal CLK2OUT after being shaped in waveform.
- CLK2INP: The clock signal is input through this terminal CLK2INP after being passed through an integrating circuit with a small time constant. This clock signal is used to delete spikes which appear immediately before the rising edges and after the falling edges of the signal input through the terminal CLK2OUT. This input terminal CLK2INP has a Schmitt trigger circuit. The clock signal input through this terminal is synchronized with the transmission timing of the radio wave from the tablet.
- WIDTH, WIDTHOUT: A circuit with a properly selected time constant is connected between these terminals. A pulse is generated at the time when the signal input through the terminal CLK2INP rises such that the width of the pulse is determined by the time constant of the circuit connected between the terminals WIDTH and WIDTHOUT. When the data to be returned is "1", the signal level at the terminal OUT becomes low during the period equal to the width of the above pulse, and the operation of the resonant circuit is disabled during this period.
- RESOUT: A high level signal is output through this terminal during the period given by subtracting the pulse width determined by the time constant between WIDTH and WIDTHOUT from the period in which the input signal of the terminal CLK2INP is high. The signal output through this terminal RESOUT is used to detect the duration of the signal induced in the resonant circuit thereby detecting the timing of the command transmitted from the tablet and also the timing of the burst signal.
- DATA: A circuit with a properly selected time constant is connected between this terminal and the terminal RESOUT. On the basis of this time constant, it is determined whether the duration of the radio wave transmitted from the tablet is longer than 100 µsec thereby determining whether the command transmitted from the tablet is "0" or "1".
- RES: A circuit with a properly selected time constant is connected between this terminal and the terminal RESOUT. On the basis of this time constant, it is determined whether the duration of the radio wave transmitted from the tablet is longer than 700 µsec thereby determining whether the signal transmitted from the tablet is a burst signal. If the voltage at this terminal becomes higher than the threshold voltage, the digital data which has been detected through the terminal DATA is regarded as a command and thus is held. If the voltage at the terminal RES becomes low after the transmission of the radio wave from the tablet is stopped, the voltage at the terminal RES is forced to become low. After that, data is transmitted through the terminal OUT to the tablet, depending on the command held. The width of the pulse input through the terminal AN1, AN2, or EPR is determined by counting the number of clock pulses input through the terminal CLK1A or CLK1B while the signal at the terminal RES is high, thereby converting the analog information representing, for example, the pen pressure to a digital value.
- GATE: A pulse signal is output through this terminal GATE to detect the change in time constant thereby detecting the analog quantity such as the pen pressure.
- ZERO: A circuit with a properly determined time constant is connected to this terminal ZERO so that the zero position in the conversion from the analog quantity such as the pen pressure to the digital form is correctly set. In the cursor mode, this terminal serves as the SW8 input terminal.
- AN1: A circuit with a properly selected time constant is connected to this terminal AN1. In the 3-D and barrel modes, the delay in the signal is evaluated relative to the time constant of this circuit and also to the time constant of the circuit connected to the terminal EPR. The signal having a greater time delay is selected and converted to a digital signal. Information about which signal is selected is also returned. In the cursor mode, this terminal serves as the SW7 input terminal.
- EPR: The circuit with the time constant for detecting the pen pressure is connected to this terminal. In the 3-D and barrel modes, the delay in the signal is evaluated relative to the time constant of this circuit and also to the time constant of the circuit connected to the terminal EPR. The signal having a greater time delay is selected and converted to a digital signal. Information about which is selected is also returned. In the cursor mode, this terminal serves as the SW6 input terminal.
- AN2: A circuit with a time constant for detecting the analog quantity associated with the side slider in the barrel and eraser mode is connected to this terminal AN2. In the cursor and 3-D modes, this terminal serves as the SW4 input terminal.
- CLK1A: The signal induced in the resonant circuit is applied to this terminal (the signal is used to detect the pen pressure).
- CLK1B: The signal induced in the eraser-side resonant circuit is applied to this terminal (the signal is used to detect the pen pressure).
- BARREL: In the barrel mode, the rotation detecting control signal is output through this terminal. In the cursor and 3-D modes, this terminal serves as the SW5 input terminal. In the eraser mode, this terminal serves as the manufacturer test terminal which is generally connected to GND.
- SW1: SW1 input terminal.
- SW2: SW2 input terminal.
- D0: Mode setting input terminal.
- D1: Mode setting input terminal.
- SIFT: Frequency shift control signal output terminal used in the multiple mode.
- OUT: The resonant circuit control signal output terminal through which digital data is returned to the tablet.
- EXCLK: The clock signal output terminal used when an external 64-bit ROM (S-2100R) is employed.
- EXT: Expanded data input terminal.
- PDN: A signal is applied through this terminal PDN such that the signal has a slight delay from the time when the electric power is turned on thereby ensuring that the SIFT and BARREL terminals are at low levels in the initial state.

### 9. W4022F

### (1) Outline

W4022F is a gate array for use in pointers having the digital communications capability.

W4022F has a greater number of pins than W4021S, and additional functions are available. W4022F is upwardly compatible with W4021S so that W4021S can be replaced with W4022F.
Manufacturer: Sharp Corp.
Product Name: LZ96650 (650 gates)
Package: 48 pin QFP

### Differences from W4021S

① Up to four different pieces of 10-bit analog information can be detected.
② Digital information with up to 17-bits can be input.

### (2) Brief Description of the Functions

W4022F includes a command receiving circuit for receiving 4-bit digital data transmitted from a tablet by means of digital transmission, a data transmitting circuit for transmitting digital data depending on the received command, and a circuit for detecting an analog quantity (such as a pen pressure) represented by a change in capacitance or resistance. With these elements, the tablet and the digital pen communicate with each other by means of bidirectional digital communications.

W4022F performs a predefined operation in accordance with the 4-bit data received from the tablet. As in W4021S, four different operation modes can be set through terminals D1 and D2.

Of the operations predefined for the respective commands, the transmission of ID data (*011), the frequency shift (*111), and the transmission of 63-bit ID data (**01) are common for all modes. The operations for these commands are the same as those performed by W4021S.

Once given the above disclosure, therefore, various other modifications, features, or improvements will become apparent to the skilled artisan. Such other features, modifications, and improvements are thus considered a part of this invention, the scope of which is to be determined by the following claims.

## Claims

1. A digitizer coordinate input system comprising:
a digitizer tablet including a plurality of conductive members;
a pointer for manipulation proximate said tablet in order to input coordinate information;
at least some of said conductive members of said tablet generating electromagnetic waves which are sent to said pointer and define an ID request for the pointer to transmit ID information indicative of the pointer's ID to said tablet; and
said pointer including a circuit that receives the request from said tablet, and wherein the pointer interprets the request from said tablet and in response thereto transmits pointer ID information, for identifying the pointer, to said tablet.

2. The input system of claim 1, wherein the pointer only transmits pointer ID information to the tablet in response to receiving an ID request from the tablet.

3. The input system of claim 1, wherein the pointer does not transmit pointer ID information to the tablet in a continuous or a substantially continuous manner.

4. The input system of claim 1, wherein said conductive members are overlapping loop coils of said tablet which generate the electromagnetic waves which are sent to the pointer, and the same overlapping loop coils in the tablet detect waves sent from the pointer to the tablet.

5. The input system of claim 1, wherein a first group of overlapping loop coils in the tablet generate the electromagnetic waves which are sent to the pointer, and a second different group of overlapping loop coils in the tablet detect waves sent from the pointer to the tablet including the pointer ID information.

6. The input system of claim 1, wherein the duration or pulse width of the waves sent to the pointer is interpreted by the pointer so as to represent digital information, with such digital information defining the ID request.

7. The input system of claim 1, wherein waves of a first duration or pulse width received by the pointer from the tablet are interpreted as 0s and waves of a different second duration or pulse width received from the tablet are interpreted by the pointer as 1s, and wherein a predetermined sequence of 0s and/or 1s is interpreted by the pointer as representing the ID request.

8. The input system of claim 1, wherein the pointer includes first and second integrating circuits with differing time constants, each of said integrating circuits in communication with a comparator, said integrating circuits for processing signals received from the tablet in order to determine wave duration or pulse width.

9. The input system of claim 8, further including means for determining when a received wave is of a certain duration by determining that the pulse ends before output signals of each of said integrating circuits reach a threshold level of the corresponding comparators.

10. The input system of claim 9, including means for sequentially applying at least three types of pulse widths to inputs of the integrating circuits, so that signals with increasing voltage as a function of pulse width are output by the integrating circuits.
